# EUROPEAN PATENT APPLICATION

(11) **EP 4 818 545 A1**
(43) Date of publication of application: **07.10.2026**
(21) Application number: 24902562.8
(22) Date of filing: 27.11.2024
(51) Int. Cl.: F16F 9/34, F16F 9/348, F16F 9/46, F16F 9/36, F16K 31/40, F16K 31/06, F16K 1/36, F16K 27/02

(54) **ADJUSTMENT MODULE FOR SHOCK ABSORBER, SHOCK ABSORBER, AND VEHICLE**

(30) Priority: 12.12.2023 CN 202311723603; 12.12.2023 CN 202323387004 U; 12.12.2023 CN 202323395915 U; 12.12.2023 CN 202323389564 U
(71) Applicant: BYD Company Limited, Shenzhen, Guangdong 518118 (CN)
(72) Inventor: LU, Yinbo, Shenzhen, Guangdong 518118 (CN); LU, Jieyu, Shenzhen, Guangdong 518118 (CN); MA, Jian, Shenzhen, Guangdong 518118 (CN); CHEN, Xiaowei, Shenzhen, Guangdong 518118 (CN)
(74) Representative: Taor, Simon Edward William
(86) International application number: PCT/CN2024/134845
(87) International publication number: WO 2025/124140

(57) **Abstract**

This application discloses an adjustment module for a damper, a damper, and a vehicle. The adjustment module separately communicates with a compression chamber and a rebound chamber of the damper. The adjustment module includes an overflow valve seat, an overflow valve fixing sleeve, an overflow valve body, and an overflow elastic member. The overflow valve fixing sleeve is located on one side of the overflow valve seat. The overflow valve body is movably disposed in the overflow valve fixing sleeve, and the overflow valve body adjusts a fluid flow rate between the compression chamber and the rebound chamber by getting close to and away from the overflow valve seat. The overflow elastic member is disposed between the overflow valve fixing sleeve and the overflow valve body, and the overflow elastic member provides an elastic force for pushing the overflow valve body toward the overflow valve seat.

## Description

### CROSS-REFERENCE TO RELATED APPLICATIONS

This application claims priorities to Chinese Patent Application No. 202311723603.X, filed with the China National Intellectual Property Administration on December 12, 2023 and entitled "ADJUSTMENT MODULE FOR DAMPER, DAMPER, AND VEHICLE", to Chinese Patent Application No. 202323387004.3, filed with the China National Intellectual Property Administration on December 12, 2023 and entitled "OVERFLOW SEALING MEMBER FOR ADJUSTMENT MODULE, ADJUSTMENT MODULE, DAMPER, AND VEHICLE", to Chinese Patent Application No. 202323395915.0, filed with the China National Intellectual Property Administration on December 12, 2023 and entitled "OVERFLOW VALVE BODY FOR ADJUSTMENT MODULE, ADJUSTMENT MODULE, DAMPER, AND VEHICLE", and to Chinese Patent Application No. 202323389564.2, filed with the China National Intellectual Property Administration on December 12, 2023 and entitled "ELECTROMAGNETIC ASSEMBLY, SOLENOID VALVE, ADJUSTMENT MODULE, DAMPER, AND VEHICLE", all of which are incorporated herein by reference in their entireties.

### TECHNICAL FIELD

This application relates to the field of vehicle technologies, and in particular, to an adjustment module for a damper, a damper, and a vehicle.

### BACKGROUND

A vehicle damper is mounted in a wheel region of a vehicle, to reduce bumpiness in a traveling process of the vehicle. When a vehicle body and a wheel move relative to each other, a piston in the vehicle damper moves up and down, and fluid in damper chambers repeatedly flows from one chamber to another through different orifices, converting vibration energy into thermal energy of the fluid and gas and dissipating the thermal energy into the atmosphere. This allows the damper to operate efficiently within a relatively low temperature range.

In a related technology, the damper has a compression chamber and a rebound chamber, and an overflow valve is usually connected between the compression chamber and the rebound chamber. The overflow valve includes an overflow valve body and an overflow valve seat. The overflow valve controls liquid flow between the compression chamber and the rebound chamber by controlling movement of the overflow valve body relative to the overflow valve seat. However, when the overflow valve body moves in a direction close to the overflow valve seat, there is a problem of slow reset of the overflow valve body, and when the overflow valve body moves in a direction away from the overflow valve seat, there are problems of unstable movement of the overflow valve body and unstable fluid flow.

### SUMMARY

This application is intended to resolve at least one of technical problems in the conventional technology. Therefore, an objective of this application is to provide an adjustment module for a damper. An overflow valve body of the adjustment module moves stably and resets quickly.

This application further provides a damper.

This application further provides a vehicle.

According to the adjustment module for a damper in this application, the adjustment module separately communicates with a compression chamber and a rebound chamber of the damper. The adjustment module includes: an overflow valve seat; an overflow valve fixing sleeve, where the overflow valve fixing sleeve is located on one side of the overflow valve seat; an overflow valve body, where the overflow valve body is movably disposed in the overflow valve fixing sleeve, and the overflow valve body adjusts a fluid flow rate between the compression chamber and the rebound chamber by getting close to and away from the overflow valve seat; and an overflow elastic member, where the overflow elastic member is disposed between the overflow valve fixing sleeve and the overflow valve body, and the overflow elastic member provides an elastic force for pushing the overflow valve body toward the overflow valve seat.

Therefore, according to the adjustment module for a damper in this embodiment of this application, the overflow elastic member is disposed between the overflow valve fixing sleeve and the overflow valve body, so that the overflow valve body can move stably, and quick reset of the overflow valve body can be achieved.

In some examples of this application, the overflow elastic member is a spring. The overflow elastic member is disposed in the overflow valve fixing sleeve. One end of the overflow elastic member abuts against the overflow valve fixing sleeve, and the other end abuts against the overflow valve body.

In some examples of this application, an outer diameter of the end that is of the overflow elastic member and that abuts against the overflow valve fixing sleeve is greater than an outer diameter of the end that is of the overflow elastic member and that abuts against the overflow valve body.

In some examples of this application, the adjustment module further includes: a valve body, where the overflow valve fixing sleeve is mounted in the valve body, and at least a part of the overflow valve seat is mounted in the valve body; and a control valve, where the control valve controls movement of the overflow valve body to get close to and away from the overflow valve seat.

In some examples of this application, the overflow valve seat is provided with at least one first communication hole and at least one second communication hole. One of the compression chamber and the rebound chamber communicates with the first communication hole, and the other of the compression chamber and the rebound chamber communicates with the second communication hole. The adjustment module is configured with a first flow path and a second flow path, and a flow rate of the first flow path is different from a flow rate of the second flow path. The adjustment module controls the first communication hole and the second communication hole to selectively pass through at least one of the first flow path and the second flow path.

In some examples of this application, the first communication hole is disposed at a center of the overflow valve seat. There are a plurality of second communication holes, and the plurality of second communication holes are spaced apart in a circumferential direction of the overflow valve seat and surround the first communication hole.

In some examples of this application, the adjustment module further includes an overflow valve distance adjustment ring. The overflow valve distance adjustment ring is disposed in the valve body and supported between the overflow valve seat and the overflow valve fixing sleeve.

In some examples of this application, the overflow valve seat is in threaded fit with the valve body, and the overflow valve seat adjusts a deformation amount of the overflow valve distance adjustment ring by adjusting a degree of tightening with the valve body, to adjust a distance from each of the overflow valve fixing sleeve and the overflow valve body to the overflow valve seat.

In some examples of this application, a height of the overflow valve distance adjustment ring in an axial direction of the overflow valve distance adjustment ring is 2.5 mm to 5 mm.

In some examples of this application, a section that is of the overflow valve distance adjustment ring and that is parallel to the axial direction of the overflow valve distance adjustment ring is configured to be arc-shaped or linear, and a distance between an end that is of the overflow valve distance adjustment ring and that is adjacent to the overflow valve seat and a central axis of the overflow valve distance adjustment ring is greater than a distance between an end that is of the overflow valve distance adjustment ring and that is adjacent to the overflow valve fixing sleeve and the central axis of the overflow valve distance adjustment ring.

In some examples of this application, a first abutting inclined surface is configured at an end that is of the overflow valve distance adjustment ring and that faces the overflow valve fixing sleeve, and a distance between the first abutting inclined surface and the central axis of the overflow valve distance adjustment ring gradually increases in a direction from the overflow valve seat to the overflow valve fixing sleeve. A second abutting inclined surface is configured at an end that is of the overflow valve fixing sleeve and that faces the overflow valve distance adjustment ring, and a distance between the second abutting inclined surface and a central axis of the overflow valve fixing sleeve gradually increases in the direction from the overflow valve seat to the overflow valve fixing sleeve. The first abutting inclined surface fits with the second abutting inclined surface.

In some examples of this application, the adjustment module for a damper further includes an overflow sealing member. The overflow sealing member separately abuts and seals against the overflow valve fixing sleeve and the overflow valve body of the adjustment module. A deformation groove is configured on a side that is of the overflow sealing member and that faces an overflow chamber of the adjustment module, and the deformation groove communicates with the overflow chamber. The overflow sealing member is configured so that after fluid in the overflow chamber flows into the deformation groove, pressure applied to the overflow sealing member causes the overflow sealing member to expand in a direction of at least one of the overflow valve fixing sleeve and the overflow valve body.

In some examples of this application, the overflow sealing member is configured to be annular and located between an outer peripheral surface of the overflow valve body and an inner peripheral surface of the overflow valve fixing sleeve. The deformation groove extends in a circumferential direction of the overflow sealing member, and a width of a side that is of the deformation groove and that is adjacent to the overflow chamber is greater than a width of a side that is of the deformation groove and that is away from the overflow chamber.

In some examples of this application, a distance between an outer peripheral surface and an inner peripheral surface of a side that is of the overflow sealing member and that is adjacent to the overflow chamber is greater than a distance between an outer peripheral surface and an inner peripheral surface of a side that is of the overflow sealing member and that is away from the overflow chamber.

In some examples of this application, the overflow sealing member includes: an outer sealing ring, where the outer sealing ring abuts against the overflow valve fixing sleeve; and an inner sealing ring, where the inner sealing ring abuts against the overflow valve body. The deformation groove is formed between the outer sealing ring and the inner sealing ring.

In some examples of this application, a cross-section of the inner sealing ring is disposed parallel to a central axis of the overflow sealing member. A cross-section of the outer sealing ring is disposed inclined relative to the central axis of the overflow sealing member, and a distance between the outer sealing ring and the central axis of the overflow sealing member gradually increases in a direction toward the overflow chamber.

In some examples of this application, a section that is of the inner sealing ring and that is parallel to the central axis of the overflow sealing member is linear or arc-shaped. A section that is of the outer sealing ring and that is parallel to the central axis of the overflow sealing member is linear or arc-shaped.

In some examples of this application, a bottom sealing ring is further included. An outer peripheral edge of the bottom sealing ring is connected to a side that is of the outer sealing ring and that faces away from the overflow chamber, and an inner peripheral edge of the bottom sealing ring is connected to a side that is of the inner sealing ring and that faces away from the overflow chamber.

In some examples of this application, a side surface that is of the bottom sealing ring and that faces away from the outer sealing ring and the inner sealing ring is configured as a plane perpendicular to the central axis of the overflow sealing member.

In some examples of this application, a side surface that is of the bottom sealing ring and that forms a groove bottom of the deformation groove is configured as a plane perpendicular to the central axis of the overflow sealing member.

In some examples of this application, the overflow valve body of the adjustment module for a damper is provided with: a first overflow passage, where the first overflow passage communicates with an overflow chamber of the adjustment module and is provided for fluid to flow into the overflow chamber; and a second overflow passage, where the second overflow passage communicates with the overflow chamber and is provided for fluid to flow out of the overflow chamber. A minimum cross-sectional area of the second overflow passage is greater than a minimum cross-sectional area of the first overflow passage.

In some examples of this application, the overflow valve body includes: a valve shoulder, where the first overflow passage is disposed in the valve shoulder, and the overflow chamber is located on one side of the valve shoulder in a thickness direction; and a guide post, where the guide post is disposed on the one side of the valve shoulder in the thickness direction, and the second overflow passage is disposed in the guide post.

In some examples of this application, a central axis of the guide post coincides with a central axis of the valve shoulder.

In some examples of this application, the second overflow passage includes: at least one radial segment, where the radial segment extends in a direction perpendicular to an axial direction of the guide post, and one end of the radial segment communicates with the overflow chamber; and an axial segment, where the axial segment extends in the axial direction of the guide post, one end of the axial segment communicates with the other end of the radial segment, and the other end of the axial segment penetrates an end that is of the guide post and that faces away from the valve shoulder.

In some examples of this application, a ratio of the minimum cross-sectional area of the first overflow passage to a minimum cross-sectional area of the axial segment is 1:10 to 1:4.

In some examples of this application, a sum of minimum cross-sectional areas of all radial segments is greater than or equal to the minimum cross-sectional area of the axial segment.

In some examples of this application, there are a plurality of radial segments that are spaced apart in a circumferential direction of the guide post.

In some examples of this application, there are two radial segments whose central axes coincide.

In some examples of this application, the axial segment includes: a bottom segment, where one end of the bottom segment communicates with the other end of the radial segment; and a top segment, where one end of the top segment communicates with the other end of the bottom segment, and the other end of the top segment penetrates the end that is of the guide post and that faces away from the valve shoulder. A cross-sectional area of the bottom segment is less than a cross-sectional area of the top segment.

In some examples of this application, the first overflow passage includes: a middle segment; a first diverging segment, where the first diverging segment communicates with the middle segment and is located on a side that is of the middle segment and that faces away from the overflow chamber, and a cross-sectional area of an end that is of the first diverging segment and that is adjacent to the middle segment is less than a cross-sectional area of an end that is of the first diverging segment and that is away from the middle segment; and a second diverging segment, where the second diverging segment communicates with the middle segment and is located on a side that is of the middle segment and that faces the overflow chamber, and a cross-sectional area of the second diverging segment gradually increases in a direction away from the middle segment.

In some examples of this application, the overflow valve body further includes a valve ring. The valve ring is disposed on the other side of the valve shoulder in the thickness direction and extends in an annular shape along an outer peripheral edge of the valve shoulder.

In some examples of this application, an overflow sealing groove for assembling an overflow sealing member is disposed on an outer peripheral surface of the valve ring.

In some examples of this application, the overflow sealing groove has a first groove wall and a second groove wall. The first groove wall is located on a side that is of the overflow sealing groove and that faces the guide post, and the second groove wall is located on a side that is of the overflow sealing groove and that faces away from the guide post. In a direction perpendicular to an axial direction of the overflow valve body, the second groove wall is higher than the first groove wall.

In some examples of this application, an annular sealing platform for fitting with a pilot valve plug of the adjustment module is configured at an end that is of the guide post and that is away from the valve shoulder. The annular sealing platform is disposed around the second overflow passage, and a distance between an inner peripheral surface of an end that is of the annular sealing platform and that is adjacent to the valve shoulder and a central axis of the annular sealing platform is less than a distance between an inner peripheral surface of an end that is of the annular sealing platform and that is away from the valve shoulder and the central axis of the annular sealing platform.

In some examples of this application, a distance between an outer peripheral surface of the end that is of the annular sealing platform and that is adjacent to the valve shoulder and the central axis of the annular sealing platform is greater than a distance between an outer peripheral surface of the end that is of the annular sealing platform and that is away from the valve shoulder and the central axis of the annular sealing platform.

In some examples of this application, an electromagnetic assembly is further included. The electromagnetic assembly includes: an insulating bracket, where a coil groove is disposed on an outer sidewall of the insulating bracket; and a magnetically conductive cover, where the magnetically conductive cover is mounted on the insulating bracket and covers the coil groove. At least one anti-rotation positioning post is configured at one end of the insulating bracket, the magnetically conductive cover is provided with at least one anti-rotation positioning hole, and the anti-rotation positioning post passes through the anti-rotation positioning hole. A part that is of the anti-rotation positioning post and that extends out of the anti-rotation positioning hole is configured with an axial positioning portion, and the magnetically conductive cover is stopped by the axial positioning portion.

In some examples of this application, the axial positioning portion is integrally formed with the anti-rotation positioning post.

In some examples of this application, there are a plurality of anti-rotation positioning posts that are spaced apart in a circumferential direction of the insulating bracket, and there are a plurality of anti-rotation positioning holes that are spaced apart in a circumferential direction of the magnetically conductive cover. The plurality of anti-rotation positioning posts pass through the plurality of anti-rotation positioning holes in a one-to-one correspondence.

In some examples of this application, the plurality of anti-rotation positioning posts are evenly spaced apart in the circumferential direction of the insulating bracket, and the plurality of anti-rotation positioning holes are evenly spaced apart in the circumferential direction of the magnetically conductive cover.

In some examples of this application, a cross-section of the anti-rotation positioning post and a cross-section of the anti-rotation positioning hole are mutually adapted circular shapes.

In some examples of this application, a control valve assembly is included. The control valve assembly includes the electromagnetic assembly. The control valve assembly further includes: a valve body, where the insulating bracket and the magnetically conductive cover are mounted on the valve body; a coil, where the coil is wound in the coil groove of the insulating bracket and covered by the magnetically conductive cover; a valve core cover, where the valve core cover is mounted on the insulating bracket; a valve core, where the valve core is movably mounted in the valve core cover; a guide rod, where the guide rod is connected to the valve core; and a pilot valve plug, where the pilot valve plug is connected to the guide rod. When the coil is energized, the valve core generates magnetism and attracts the valve body.

In some examples of this application, a magnetic isolation ring is further included. The magnetic isolation ring is disposed around the valve core and located between the valve core cover and the valve body.

In some examples of this application, one of the magnetic isolation ring and the valve core cover is provided with an inner assembly ring, and the other is provided with an outer assembly ring. The outer assembly ring is sleeved on the inner assembly ring and is in interference fit with the inner assembly ring.

In some examples of this application, an annular support groove is disposed on a side that is of the valve body and that faces the control valve, and an annular support platform is configured on a side that is of the magnetic isolation ring and that faces the valve body. The annular support platform fits with the annular support groove and is in interference fit with the annular support groove.

In some examples of this application, a guide rod groove is configured on an inner wall surface of the valve core cover, and the guide rod movably fits with the guide rod groove.

In some examples of this application, a first guide sleeve is disposed in the guide rod groove, and the guide rod movably fits with the first guide sleeve.

In some examples of this application, at least one first flow-through groove is disposed on an outer side surface that is of the first guide sleeve and that fits with the valve core cover, and two ends of the first flow-through groove respectively penetrate two axial ends of the first guide sleeve.

In some examples of this application, there are a plurality of first flow-through grooves that are spaced apart in a circumferential direction of the first guide sleeve.

In some examples of this application, the valve body is configured with a guide rod hole, and the guide rod movably fits with the guide rod hole.

In some examples of this application, a second guide sleeve is disposed in the guide rod hole, and the guide rod movably fits with the second guide sleeve.

In some examples of this application, at least one second flow-through groove is disposed on an outer side surface that is of the second guide sleeve and that fits with the valve body, and two ends of the second flow-through groove respectively penetrate two axial ends of the second guide sleeve.

In some examples of this application, there are a plurality of second flow-through grooves that are spaced apart in a circumferential direction of the second guide sleeve.

In some examples of this application, the control valve assembly further includes: a first elastic member, where a first recess is configured on an inner wall surface that is of the valve core cover and that faces the valve core, a second recess is configured at an end that is of the valve core and that faces the valve core cover, and two ends of the first elastic member respectively fit with the first recess and the second recess; and a second elastic member, where a third recess is configured at an end that is of the valve core and that faces the valve body, one end of the second elastic member fits with the third recess, and the other end abuts against the second guide sleeve. The first elastic member and the second elastic member jointly apply an elastic force to the valve core to maintain positional stability of the valve core.

In some examples of this application, the valve core is provided with at least one through hole, and two ends of the through hole respectively penetrate two ends of the valve core.

In some examples of this application, a limiting structure is configured on a side that is of the valve body and that faces the valve core. Two limit positions of the valve core in a movement direction of the valve core are respectively defined by the limiting structure and the valve core cover.

In some examples of this application, the pilot valve plug is configured with a mounting ring. The mounting ring is sleeved on the guide rod and is in clearance fit with the guide rod.

In some examples of this application, the solenoid valve assembly is a solenoid valve assembly.

The damper according to this application includes: at least one adjustment module for a damper; and a cylinder body. The compression chamber and the rebound chamber are defined in the cylinder body.

In some examples of this application, the cylinder body includes an outer cylinder and an inner cylinder disposed in the outer cylinder. The adjustment module is externally disposed outside the outer cylinder.

In some examples of this application, there are at least two adjustment modules. One of the adjustment modules adjusts a flow rate of fluid flowing from the compression chamber to the rebound chamber, and another of the adjustment modules adjusts a flow rate of fluid flowing from the rebound chamber to the compression chamber.

The vehicle according to this application includes the damper.

Some of additional aspects and advantages of this application are provided in the following descriptions, and some of the additional aspects and advantages become clear from the following descriptions or are learned from practice of this application.

### BRIEF DESCRIPTION OF DRAWINGS

The foregoing and/or additional aspects and advantages of this application are clear and easily understood from the descriptions of the embodiments provided with reference to the following accompanying drawings.
FIG. 1 is a sectional view of an adjustment module according to an embodiment of this application;
FIG. 2 is a sectional view of an adjustment module in a first state according to an embodiment of this application;
FIG. 3 is a sectional view of an adjustment module in a second state according to an embodiment of this application;
FIG. 4 is a sectional view of an adjustment module in a third state according to an embodiment of this application;
FIG. 5 is a sectional view of an adjustment module in a fourth state according to an embodiment of this application;
FIG. 6 is a schematic structural diagram of an overflow valve seat;
FIG. 7 is a sectional view of an overflow valve seat;
FIG. 8 is a schematic structural diagram of an overflow valve fixing sleeve;
FIG. 9 is a schematic structural diagram of an overflow valve fixing sleeve;
FIG. 10 is a schematic structural diagram of an overflow valve body;
FIG. 11 is a sectional view of an overflow valve body;
FIG. 12 is a schematic structural diagram of an overflow elastic member;
FIG. 13 is a schematic structural diagram of a valve body;
FIG. 14 is a sectional view of a valve body;
FIG. 15 is a schematic structural diagram of a pilot valve plug;
FIG. 16 is a sectional view of a pilot valve plug;
FIG. 17 is a schematic structural diagram of an overflow sealing member;
FIG. 18 is a sectional view of an overflow sealing member;
FIG. 19 is a schematic structural diagram of a first electromagnetic assembly, where a magnetically conductive cover is omitted from the electromagnetic assembly;
FIG. 20 is a sectional view of a first electromagnetic assembly;
FIG. 21 is a schematic structural diagram of a first magnetically conductive cover;
FIG. 22 is a schematic structural diagram of a second electromagnetic assembly;
FIG. 23 is a schematic structural diagram of a second electromagnetic assembly, where a magnetically conductive cover is omitted from the electromagnetic assembly;
FIG. 24 is a schematic structural diagram of a second magnetically conductive cover;
FIG. 25 is a sectional view of a valve core cover;
FIG. 26 is a schematic structural diagram of a valve core;
FIG. 27 is a sectional view of a valve core;
FIG. 28 is a schematic structural diagram of a magnetic isolation ring;
FIG. 29 is a sectional view of a magnetic isolation ring;
FIG. 30 is a schematic structural diagram of a first guide sleeve; and
FIG. 31 is a schematic block diagram of a vehicle according to an embodiment of this application.

### Reference numerals:

3000: vehicle; 2000: damper; 1000: adjustment module;
10: overflow valve seat; 11: first communication hole; 12: second communication hole; 13: assembly ring; 14: first sealing groove; 15: first sealing ring;
20: overflow valve fixing sleeve; 21: guide hole; 22: annular flow-guiding platform; 23: annular flow-guiding groove; 24: flow-guiding branch groove; 25: second abutting inclined surface;
30: overflow valve body; 31: guide post; 311: annular sealing platform; 32: overflow sealing groove; 321: first groove wall; 322: second groove wall; 33: valve shoulder; 34: valve ring;
40: overflow elastic member;
50: valve body; 51: support boss; 52: annular support groove; 53: guide rod hole; 54: second guide sleeve; 55: limiting structure; 56: second sealing groove; 57: second sealing ring; 58: annular stop platform;
60: control valve;
70: first flow path;
80: second flow path; 81: overflow chamber; 82: pilot chamber; 83: first overflow passage; 8311: first diverging segment; 8312: second diverging segment; 8313: middle segment; 84: second overflow passage; 841: radial segment; 842: axial segment; 8421: bottom segment; 8422: top segment; 85: third overflow passage;
90: pilot valve plug; 91: valve plate; 92: valve head; 93: flow-guiding ring; 94: mounting ring;
100: overflow sealing member; 101: deformation groove; 102: inner sealing ring; 103: outer sealing ring; 104: bottom sealing ring;
110: overflow valve distance adjustment ring; 111: first abutting inclined surface;
120: electromagnetic assembly; 121: insulating bracket; 1211: coil groove; 1212: wire post; 1213: anti-rotation positioning post; 1214: axial positioning portion; 122: coil; 123: magnetically conductive cover; 1231: anti-rotation positioning hole; 1232: inner assembly ring; 1233: avoidance hole;
130: valve core cover; 131: guide rod groove; 132: first guide sleeve; 133: first flow-through groove; 134: first recess;
140: valve core; 141: second recess; 142: third recess; 143: through hole; 144: first elastic member; 145: second elastic member;
150: guide rod;
160: magnetic isolation ring; 161: outer assembly ring; 162: annular support platform;
170: cylinder body; 171: inner cylinder; and 172: outer cylinder.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The following embodiments described with reference to the accompanying drawings are examples and are merely intended to explain this application, but should not be understood as a limitation on this application.

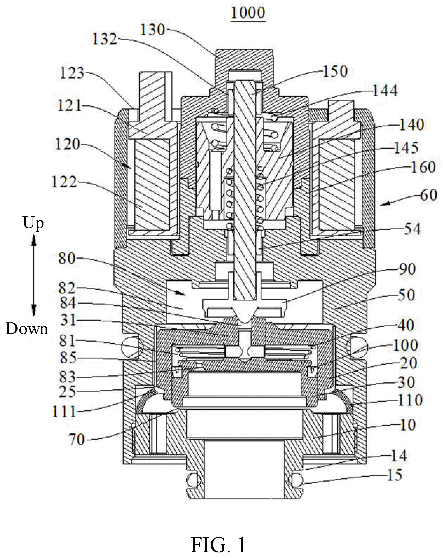

With reference to FIG. 1 to FIG. 30, the following describes an adjustment module 1000 for a damper according to an embodiment of a first aspect of this application. The damper has a compression chamber and a rebound chamber. The adjustment module 1000 separately communicates with the compression chamber and the rebound chamber of the damper. For example, fluid may flow from the compression chamber to the rebound chamber through the adjustment module 1000. For another example, fluid may flow from the rebound chamber to the compression chamber through the adjustment module 1000. The adjustment module 1000 may be configured to adjust a flow rate of fluid flowing between the compression chamber and the rebound chamber. The fluid may be oil.

As shown in FIG. 1, the adjustment module 1000 for a damper according to the embodiment of the first aspect of this application includes an overflow valve seat 10, an overflow valve fixing sleeve 20, and an overflow valve body 30. The overflow valve fixing sleeve 20 is located on one side of the overflow valve seat 10. For example, the overflow valve fixing sleeve 20 is located on an upper side of the overflow valve seat 10. The overflow valve body 30 is movably disposed in the overflow valve fixing sleeve 20, and the overflow valve body 30 adjusts a fluid flow rate between the compression chamber and the rebound chamber by getting close to and away from the overflow valve seat 10. Specifically, the overflow valve body 30 is disposed in the overflow valve fixing sleeve 20, and the overflow valve body 30 may move in the overflow valve fixing sleeve 20. A movement direction of the overflow valve body 30 may be an up-down direction. When the overflow valve body 30 moves upward, the overflow valve body 30 gets away from the overflow valve seat 10. In this way, the fluid may flow between the overflow valve body 30 and the overflow valve seat 10 in a first flow manner. When the overflow valve body 30 moves downward, the overflow valve body 30 gets close to the overflow valve seat 10 until the overflow valve body 30 comes into contact with the overflow valve seat 10. In this way, the first flow manner is closed, and the oil may flow between the overflow valve fixing sleeve 20, the overflow valve body 30, and the overflow valve seat 10 in a second flow manner. A fluid flow rate in the second flow manner is less than a fluid flow rate in the first flow manner. Certainly, the first flow manner and the second flow manner may run simultaneously. Based on this, the adjustment module 1000 controls the fluid in the compression chamber and the rebound chamber by controlling the fluid flow rate, to control corresponding "soft" and "hard" characteristics exhibited by the damper in a damping process, thereby improving passability and comfort of a vehicle.

According to some embodiments of this application, as shown in FIG. 1, the adjustment module 1000 includes an overflow elastic member 40. The overflow elastic member 40 is disposed between the overflow valve fixing sleeve 20 and the overflow valve body 30, and the overflow elastic member 40 provides an elastic force for pushing the overflow valve body 30 toward the overflow valve seat 10. It may be understood that under action of the fluid, the overflow valve body 30 moves upward and gradually gets away from the overflow valve seat 10. In this case, the overflow elastic member 40 is under pressure and continuously compressed, and an elastic force generated by the overflow elastic member 40 gradually increases and acts on the overflow valve body 30. In this way, the overflow valve body 30 can move stably, thereby avoiding an excessively high or excessively low flow rate of fluid flowing between the overflow valve body 30 and the overflow valve seat 10. This can ensure a stable fluid flow rate, and can further ensure damping stability of the damper. Under control of the adjustment module 1000, the overflow valve body 30 moves downward and gradually gets close to the overflow valve seat 10. In this case, the overflow elastic member 40 continuously releases the elastic force generated during compression. In this way, the overflow valve body 30 can move toward the overflow valve seat 10 more quickly. Therefore, the adjustment module 1000 can switch from the first flow manner to the second flow manner, achieving quick reset and switching. In addition, because the overflow elastic member 40 is disposed between the overflow valve fixing sleeve 20 and the overflow valve body 30, in a normal case, the overflow elastic member 40 causes the overflow valve body 30 to maintain a relatively stable position relative to the overflow valve seat 10, thereby further improving an adjustment capability of the adjustment module 1000. Therefore, according to the adjustment module 1000 for a damper in this embodiment of the first aspect of this application, the overflow elastic member 40 is disposed between the overflow valve fixing sleeve 20 and the overflow valve body 30, so that the overflow valve body 30 can move stably, and quick reset of the overflow valve body 30 can be achieved.

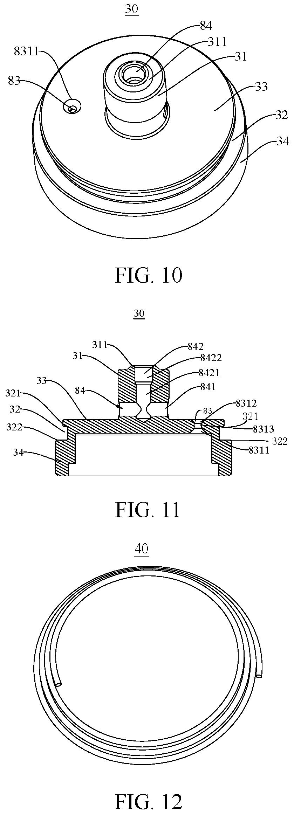

According to a specific embodiment of this application, as shown in FIG. 1 and FIG. 12, the overflow elastic member 40 is a spring. The overflow elastic member 40 is disposed in the overflow valve fixing sleeve 20. One end of the overflow elastic member 40 abuts against the overflow valve fixing sleeve 20, and the other end of the overflow elastic member 40 abuts against the overflow valve body 30. Specifically, an upper end of the spring abuts against a top of the overflow valve fixing sleeve 20, and a lower end of the spring abuts against a top of the overflow valve body 30. In this way, an elastic force generated by the spring may directly act on the overflow valve body 30, and push the overflow valve body 30 to move in the up-down direction. The overflow elastic member 40 disposed in this way is simply arranged, and directly acts on the overflow valve body 30 in the up-down direction, achieving a good effect.

As shown in FIG. 1 and FIG. 12, an outer diameter of the end that is of the overflow elastic member 40 and that abuts against the overflow valve fixing sleeve 20 is greater than an outer diameter of the end that is of the overflow elastic member 40 and that abuts against the overflow valve body 30. For example, an outer diameter of the overflow elastic member 40 gradually decreases in a direction from the overflow valve fixing sleeve 20 to the overflow valve body 30, and the overflow elastic member 40 may be a tower spring whose outer diameter gradually decreases from top to bottom. In the overflow elastic member 40 disposed in this way, the end with a large outer diameter abuts against the overflow valve fixing sleeve 20, and the end with a small outer diameter abuts against the overflow valve body 30. In this way, small space may be occupied when the overflow elastic member 40 is compressed, facilitating a miniaturization design of the adjustment module 1000. In addition, abutting reliability between the overflow elastic member 40 and the overflow valve fixing sleeve 20 can be ensured, ensuring operational reliability of the adjustment module 1000. For another example, the overflow elastic member 40 may be an elastic member in a form in which there is a large outer diameter at one end, a small outer diameter at the other end, and an equal diameter in a middle part.

According to some embodiments of this application, with reference to FIG. 1 to FIG. 30, the adjustment module 1000 includes an overflow sealing member 100. An overflow chamber 81 is formed between the overflow valve fixing sleeve 20 and the overflow valve body 30, and the overflow sealing member 100 is disposed between the overflow valve fixing sleeve 20 and the overflow valve body 30, that is, the overflow sealing member 100 is disposed between the overflow valve fixing sleeve 20 and the overflow valve body 30. The overflow sealing member 100 separately abuts and seals against the overflow valve fixing sleeve 20 and the overflow valve body 30. A deformation groove 101 is configured on a side that is of the overflow sealing member 100 and that faces the overflow chamber 81, and the deformation groove 101 communicates with the overflow chamber 81. The overflow sealing member 100 is configured so that after fluid in the overflow chamber 81 flows into the deformation groove 101, pressure applied to the overflow sealing member 100 causes the overflow sealing member 100 to expand toward at least one of the overflow valve fixing sleeve 20 and the overflow valve body 30.

It may be understood that the overflow sealing member 100 is disposed between the overflow valve fixing sleeve 20 and the overflow valve body 30. The overflow sealing member 100 may perform a sealing function between the overflow valve fixing sleeve 20 and the overflow valve body 30, to ensure sealing performance of the overflow chamber 81, and facilitate quick pressure buildup in the overflow chamber 81. In addition, the overflow sealing member 100 is further configured with the deformation groove 101 communicating with the overflow chamber 81. After the fluid in the overflow chamber 81 flows into the deformation groove 101 from top to bottom, the deformation groove 101 is deformed under fluid pressure, so that at least one side of the deformation groove 101 is closely attached to the corresponding overflow valve fixing sleeve 20 and overflow valve body 30. Therefore, a better sealing effect can be achieved, higher pressure can be withstood, quick pressure buildup can be better implemented, and a leakage amount is very small. In addition, when the overflow valve body 30 and a sidewall of the overflow valve fixing sleeve 20 are sealed through the overflow sealing member 100 on a side, a movement fit gap between the overflow valve body 30 and the overflow valve fixing sleeve 20 may be designed to be relatively large. Therefore, machining tolerances of components can be relaxed, machining costs of components are low, movement between the components is smooth, and a good sealing effect is achieved. In addition, the overflow sealing member 100 disposed in this way has a simple structure, making it easy to machine the overflow valve body 30 and easy to mount the overflow sealing member 100 to the corresponding overflow valve body 30 and overflow valve fixing sleeve 20, thereby reducing assembly difficulty.

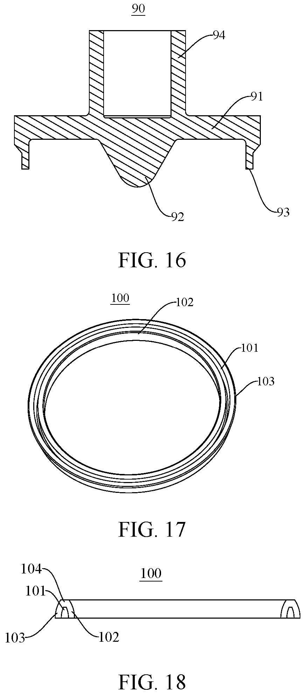

According to some further embodiments of this application, as shown in FIG. 17 and FIG. 18, the overflow sealing member 100 is configured to be annular, and the overflow sealing member 100 is located between an outer peripheral surface of the overflow valve body 30 and an inner peripheral surface of the overflow valve fixing sleeve 20. The deformation groove 101 extends in a circumferential direction of the overflow sealing member 100, and a width of a side that is of the deformation groove 101 and that is adjacent to the overflow chamber 81 is greater than a width of a side that is of the deformation groove 101 and that is away from the overflow chamber 81. For example, a width of the deformation groove 101 gradually decreases in a direction away from the overflow chamber 81. The overflow sealing member 100 is disposed between the outer peripheral surface of the overflow valve body 30 and the inner peripheral surface of the overflow valve fixing sleeve 20, so that the overflow sealing member 100 can ensure sealing performance of the overflow chamber 81 when the overflow valve body 30 moves up and down. In addition, the width of the deformation groove 101 gradually decreases in a top-to-bottom direction. In this way, the deformation groove 101 can be better pressed against the outer peripheral surface of the overflow valve body 30 and the inner peripheral surface of the overflow valve fixing sleeve 20 during deformation, thereby further improving sealing performance of the overflow sealing member 100. A section of the deformation groove 101 may be V-shaped, or may be in another shape, for example, U-shaped.

According to some embodiments of this application, as shown in FIG. 1 to FIG. 5, a distance between an outer peripheral surface and an inner peripheral surface of a side that is of the overflow sealing member 100 and that is adjacent to the overflow chamber 81 is greater than a distance between an outer peripheral surface and an inner peripheral surface of a side that is of the overflow sealing member 100 and that is away from the overflow chamber 81. For example, a distance between an outer peripheral surface and an inner peripheral surface of the overflow sealing member 100 gradually decreases in the direction away from the overflow chamber 81. That is, the distance between the outer peripheral surface and the inner peripheral surface of the overflow sealing member 100 may gradually decrease in the top-to-bottom direction. In this way, mounting of the overflow valve body 30 and the overflow valve fixing sleeve 20 can be facilitated, and mounting of the overflow sealing member 100 can be facilitated.

According to some embodiments of this application, as shown in FIG. 17, the overflow sealing member 100 may include an inner sealing ring 102 and an outer sealing ring 103. The outer sealing ring 103 abuts against the overflow valve fixing sleeve 20, and the inner sealing ring 102 abuts against the overflow valve body 30. The deformation groove 101 is formed between the outer sealing ring 103 and the inner sealing ring 102. Specifically, one end of the inner sealing ring 102 is connected to one end of the outer sealing ring 103, and the other end of the inner sealing ring 102 and the other end of the outer sealing ring 103 are away from each other. In this way, the deformation groove 101 can be formed, the inner sealing ring 102 can be closely attached to the overflow valve body 30, and the outer sealing ring 103 can be closely attached to the overflow valve fixing sleeve 20. In this way, when a force is applied to the deformation groove 101, the inner sealing ring 102 and the outer sealing ring 103 may be better closely attached to the overflow valve body 30 and the overflow valve fixing sleeve 20.

According to some specific embodiments of this application, as shown in FIG. 17 and FIG. 18, a cross-section of the inner sealing ring 102 is disposed parallel to a central axis of the overflow sealing member 100. A cross-section of the outer sealing ring 103 is disposed inclined relative to the central axis of the overflow sealing member 100, and a distance between the outer sealing ring 103 and the central axis of the overflow sealing member 100 gradually increases in a direction toward the overflow chamber 81. That is, the inner sealing ring 102 may be a circular sealing ring, and the inner sealing ring 102 is disposed at an equal distance from the central axis of the overflow sealing member 100 in the top-to-bottom direction. The outer sealing ring 103 may be a conical sealing ring, and a distance between the outer sealing ring 103 and the central axis of the overflow sealing member 100 gradually decreases in the top-to-bottom direction. In this way, the inner sealing ring 102 is better attached to the overflow valve body 30, and the outer sealing ring 103 may come into contact with the overflow valve fixing sleeve 20 in an inclined manner, and may be subsequently easily deformed with the deformation groove 101. Therefore, sealing can be better performed, and sealing performance at the overflow chamber 81 can be improved.

According to some specific embodiments of this application, as shown in FIG. 17 and FIG. 18, a section that is of the inner sealing ring 102 and that is parallel to the central axis of the overflow sealing member 100 is linear or arc-shaped. A section that is of the outer sealing ring 103 and that is parallel to the central axis of the overflow sealing member 100 is linear or arc-shaped. That is, a section of the inner sealing ring 102 may be linear in the up-down direction, or may be arc-shaped in the up-down direction. The inner sealing ring 102 in each of the two forms may be in relatively good contact with the overflow valve body 30 for sealing. A section of the outer sealing ring 103 may be in an inclined linear shape in the up-down direction, or may be arc-shaped in the up-down direction. The outer sealing ring 103 in each of the two forms may be in relatively good contact with the overflow valve fixing sleeve 20 for sealing, may facilitate subsequent deformation of the outer sealing ring 103, and may be better closely attached to the overflow valve fixing sleeve 20 during deformation.

According to a specific embodiment of this application, as shown in FIG. 17 and FIG. 18, the overflow sealing member 100 further includes a bottom sealing ring 104. An outer peripheral edge of the bottom sealing ring 104 is connected to a side that is of the outer sealing ring 103 and that faces away from the overflow chamber 81, and an inner peripheral edge of the bottom sealing ring 104 is connected to a side that is of the inner sealing ring 102 and that faces away from the overflow chamber 81. That is, the bottom sealing ring 104 may function as a connection between the inner sealing ring 102 and the outer sealing ring 103, and may further improve sealing performance through contact with the overflow valve body 30. The bottom sealing ring 104, the inner sealing ring 102, and the outer sealing ring 103 may be integrally formed. Certainly, the overflow sealing member 100 may alternatively be in a form in which the inner sealing ring 102 and the outer sealing ring 103 are directly connected. In this way, a structure of the overflow sealing member 100 can be simplified.

Further, as shown in FIG. 17 and FIG. 18, a side surface that is of the bottom sealing ring 104 and that faces away from the outer sealing ring 103 and the inner sealing ring 102 is configured as a plane perpendicular to the central axis of the overflow sealing member 100. That is, a lower side surface of the bottom sealing ring 104 may be configured as a plane. The bottom sealing ring 104 disposed in this way may be attached to the overflow valve body 30, thereby improving sealing performance between the overflow sealing member 100 and the overflow valve body 30.

According to some specific embodiments of this application, a side surface that is of the bottom sealing ring 104 and that forms a groove bottom of the deformation groove 101 is configured as a plane perpendicular to the central axis of the overflow sealing member 100. That is, an upper side surface of the bottom sealing ring 104 may also be configured as a plane. In this way, forming of the deformation groove 101 can be facilitated, and preferential force application to and deformation of the outer sealing ring 103 during deformation of the deformation groove 101 can be facilitated, thereby better improving a sealing effect.

According to some embodiments of this application, as shown in FIG. 1 to FIG. 5, FIG. 10, and FIG. 11, an overflow sealing groove 32 is disposed on at least one of the inner peripheral surface of the overflow valve fixing sleeve 20 and the outer peripheral surface of the overflow valve body 30. The overflow sealing member 100 is disposed in the overflow sealing groove 32. That is, the overflow sealing groove 32 may be disposed on the inner peripheral surface of the overflow valve fixing sleeve 20, the overflow sealing groove 32 may be disposed on the outer peripheral surface of the overflow valve body 30, or the overflow sealing groove 32 may be disposed on both the inner peripheral surface of the overflow valve fixing sleeve 20 and the outer peripheral surface of the overflow valve body 30. The overflow sealing groove 32 may function to mount the overflow sealing member 100. In this way, reliability of mounting the overflow sealing member 100 on the corresponding overflow valve fixing sleeve 20 and overflow valve body 30 can be ensured, and detachment of the overflow sealing member 100 can be avoided. Assembly difficulty may be further reduced through mounting of the overflow sealing member 100. In addition, because the overflow sealing member 100 has the deformation groove 101, assembly difficulty of the overflow sealing member 100 and the overflow sealing groove 32 is relatively low, thereby further improving assembly efficiency.

The overflow sealing member 100 may include an inner ring and an outer ring. One end of the inner ring is connected to one end of the outer ring, and the other end of the inner ring and the other end of the outer ring are away from each other. In this way, the deformation groove 101 can be formed, the inner ring can be closely attached to an inner wall of the overflow sealing groove 32, the outer ring can extend outward in an inclined manner, and the other end of the outer ring can abut against the inner peripheral surface of the overflow valve fixing sleeve 20 or the outer peripheral surface of the overflow valve body 30. This can ensure sealing performance.

According to some embodiments of this application, as shown in FIG. 11, the overflow sealing groove 32 has a first groove wall 321 and a second groove wall 322. The first groove wall 321 is located on a side that is of the overflow sealing groove 32 and that faces the overflow chamber 81, and the second groove wall 322 is located on a side that is of the overflow sealing groove 32 and that faces away from the overflow chamber 81. In a direction perpendicular to an axial direction of the overflow valve body 30, the second groove wall 322 is higher than the first groove wall 321. That is, the first groove wall 321 is formed on an upper side of the overflow sealing groove 32, and the second groove wall 322 is formed on a lower side. Compared with the second groove wall 322, the first groove wall 321 is disposed more adjacent to the overflow chamber 81. The overflow sealing member 100 may be mounted in the overflow sealing groove 32 from top to bottom. Because the second groove wall 322 is higher than the first groove wall 321, the overflow sealing member 100 may better pass through the first groove wall 321, and then enter the overflow sealing groove 32. This can facilitate assembly of the overflow sealing member 100, and can reduce assembly difficulty of the adjustment module 1000.

According to some embodiments of this application, with reference to FIG. 1 to FIG. 30, the overflow valve body 30 is provided with a first overflow passage 83 and a second overflow passage 84. The first overflow passage 83 communicates with the overflow chamber 81 of the adjustment module 1000, and the first overflow passage 83 is provided for fluid to flow into the overflow chamber 81. The second overflow passage 84 communicates with the overflow chamber 81, and the second overflow passage 84 is provided for fluid to flow out of the overflow chamber 81. That is, the overflow valve body 30 has the first overflow passage 83 and the second overflow passage 84 communicating with the overflow chamber 81. The first overflow passage 83 is a fluid inflow passage of the overflow chamber 81, and the second overflow passage 84 is a fluid outflow passage of the overflow chamber 81. The first overflow passage 83, the second overflow passage 84, and the overflow chamber 81 are disposed, so that a fluid flow manner can be provided to the adjustment module 1000, to help the adjustment module 1000 adjust the fluid flow rate between the compression chamber and the rebound chamber.

A minimum cross-sectional area of the second overflow passage 84 is greater than a minimum cross-sectional area of the first overflow passage 83. That is, the minimum cross-sectional area of the first overflow passage 83 corresponds to a minimum flow rate of the first overflow passage 83, and the minimum cross-sectional area of the second overflow passage 84 corresponds to a minimum flow rate of the second overflow passage 84. The minimum flow rate of the second overflow passage 84 is set to be greater than the minimum flow rate of the first overflow passage 83. In this way, the fluid entering the overflow chamber 81 can smoothly flow out of the overflow chamber 81 through the second overflow passage 84, so that when the fluid passes through the overflow chamber 81, higher stability can be achieved, no obstructive pressure is generated, a fluid flow rate curve is smooth, and curve fluctuation is small, thereby further improving fluid flow smoothness in the adjustment module 1000.

According to a specific embodiment of this application, as shown in FIG. 10 and FIG. 11, the overflow valve body 30 includes a valve shoulder 33 and a guide post 31. The first overflow passage 83 is disposed in the valve shoulder 33, and the overflow chamber 81 is disposed on one side of the valve shoulder 33 in a thickness direction. The guide post 31 is disposed on the one side of the valve shoulder 33 in the thickness direction, and the second overflow passage 84 is disposed in the guide post 31. It may be understood that both the guide post 31 and the overflow chamber 81 are located on the one side of the valve shoulder 33 in the thickness direction, that is, both the guide post 31 and the overflow chamber 81 are located above the valve shoulder 33. The first overflow passage 83 is disposed in the valve shoulder 33, and the first overflow passage 83 penetrates the valve shoulder 33. In this way, fluid in space below the valve shoulder 33 may be allowed to flow into the overflow chamber 81 through the first overflow passage 83, and the second overflow passage 84 in the guide post 31 may direct the fluid in the overflow chamber 81 to flow outward. The overflow valve body 30 disposed in this way has a simple structure, and positions of the first overflow passage 83 and the second overflow passage 84 are properly disposed. This can help the fluid flow into and flow out of the overflow chamber 81, thereby ensuring smooth flow of the fluid.

According to a specific embodiment of this application, as shown in FIG. 10 and FIG. 11, a central axis of the guide post 31 coincides with a central axis of the valve shoulder 33. That is, the guide post 31 is disposed at a center on an upper side of the valve shoulder 33. In this way, when the fluid in the overflow chamber 81 flows toward the center, the fluid can smoothly flow outward through the second overflow passage 84 in the guide post 31. The guide post 31 disposed in this way has relatively high structural stability, and may facilitate flow of fluid between the overflow chamber 81 and the second overflow passage 84.

According to a specific embodiment of this application, as shown in FIG. 10 and FIG. 11, the second overflow passage 84 includes at least one radial segment 841 and an axial segment 842. The radial segment 841 extends in a direction perpendicular to an axial direction of the guide post 31, and one end of the radial segment 841 communicates with the overflow chamber 81. The axial segment 842 extends in the axial direction of the guide post 31. One end of the axial segment 842 communicates with the other end of the radial segment 841, and the other end of the axial segment 842 may communicate with a pilot chamber 82. Further, the other end of the axial segment 842 penetrates an end that is of the guide post 31 and that faces away from the valve shoulder 33, and the other end of the axial segment 842 may communicate with the pilot chamber 82.

It may be understood that the second overflow passage 84 is mainly divided into the radial segment 841 and the axial segment 842. The fluid in the overflow chamber 81 is guided into the second overflow passage 84 through the radial segment 841, and then the fluid is guided into the pilot chamber 82 through the axial segment 842. In this process, the fluid first flows radially and then axially. In this way, the fluid can flow from the overflow chamber 81 into the pilot chamber 82, thereby ensuring that the fluid smoothly enters the pilot chamber 82. The second overflow passage 84 disposed in this way can ensure communication between the overflow chamber 81 and the pilot chamber 82, and can facilitate forming design, thereby reducing design difficulty of the guide post 31. An axial direction of the axial segment 842 is the up-down direction shown in the figure, a central axis of the axial segment 842 coincides with the central axis of the guide post 31, and the radial segment 841 is disposed at a position that is of the guide post 31 and that is adjacent to a lower end. In this way, it can be ensured that an inlet of the radial segment 841 continuously communicates with the overflow chamber 81, and the radial segment 841 can reduce resistance of entering the radial segment 841 by fluid.

According to a specific embodiment of this application, a ratio of the minimum cross-sectional area of the first overflow passage 83 to a minimum cross-sectional area of the axial segment 842 is 1:10 to 1:4. That is, the minimum cross-sectional area of the axial segment 842 is at least four times the minimum cross-sectional area of the first overflow passage 83, and at most 10 times the minimum cross-sectional area of the first overflow passage 83. The axial segment 842 disposed in this way can ensure that fluid flowing from the first overflow passage 83 into the overflow chamber 81 smoothly flows out of the axial segment 842, avoiding a problem of relatively low inflow and relatively low outflow. Therefore, smooth flow of the fluid can be ensured, a fluid flow rate curve can be smooth, and curve fluctuation is small.

A sum of minimum cross-sectional areas of all radial segments 841 is greater than or equal to the minimum cross-sectional area of the axial segment 842. That is, all the radial segments 841 are used as a whole, and a minimum cross-sectional area of the whole is not less than the minimum cross-sectional area of the axial segment 842. In this way, the minimum cross-sectional area of the axial segment 842 is mainly used as a reference for the minimum cross-sectional area of the second overflow passage 84. This can better adjust flow of the fluid in the second overflow passage 84, thereby ensuring smooth flow of the fluid.

Optionally, as shown in FIG. 10 and FIG. 11, there are a plurality of radial segments 841, and the plurality of radial segments 841 are spaced apart in a circumferential direction of the guide post 31. The plurality of radial segments 841 spaced apart in the circumferential direction are disposed, so that the fluid in the overflow chamber 81 can enter the second overflow passage 84 from a plurality of positions in the circumferential direction of the guide post 31. This can facilitate communication between the overflow chamber 81 and the pilot chamber 82 through the second overflow passage 84. For example, there may be two radial segments 841, and the two radial segments 841 are symmetrically disposed with respect to the central axis of the axial segment 842. For another example, there may be three radial segments 841, and the three radial segments 841 may be evenly spaced apart in the circumferential direction of the guide post 31.

Specifically, as shown in FIG. 10 and FIG. 11, there are two radial segments 841, and central axes of the two radial segments 841 coincide. That is, the two radial segments 841 are symmetrically disposed with respect to the central axis of the axial segment 842. In this way, the two radial segments 841 communicate with each other and communicate with the axial segment 842. This can help the fluid enter the axial segment 842 in two opposite directions and then flow out of the overflow chamber 81, thereby facilitating smooth flow of the fluid.

Optionally, as shown in FIG. 10 and FIG. 11, the axial segment 842 includes a bottom segment 8421 and a top segment 8422. One end of the bottom segment 8421 communicates with the other end of the radial segment 841. One end of the top segment 8422 communicates with the other end of the bottom segment 8421, and the other end of the top segment 8422 penetrates the end that is of the guide post 31 and that faces away from the valve shoulder 33. A cross-sectional area of the bottom segment 8421 is less than a cross-sectional area of the top segment 8422. That is, the axial segment 842 mainly includes the bottom segment 8421 and the top segment 8422. The top segment 8422 is located above the bottom segment 8421. In this way, the cross-sectional area of the bottom segment 8421 is the minimum cross-sectional area of the axial segment 842. Fluid entering the second overflow passage 84 from the radial segment 841 first passes through the bottom segment 8421 and then passes through the top segment 8422. In this way, there is a flow expansion process, which may facilitate flow of the fluid into the pilot chamber 82.

As shown in FIG. 10 and FIG. 11, the first overflow passage 83 includes a middle segment 8313, a first diverging segment 8311, and a second diverging segment 8312. The first diverging segment 8311 communicates with the middle segment 8313 and is located on a side that is of the middle segment 8313 and that faces away from the overflow chamber 81. A cross-sectional area of an end that is of the first diverging segment 8311 and that is adjacent to the middle segment 8313 is less than a cross-sectional area of an end that is of the first diverging segment 8311 and that is away from the middle segment 8313. For example, a cross-sectional area of the first diverging segment 8311 gradually increases in a direction away from the middle segment 8313. The second diverging segment 8312 communicates with the middle segment 8313 and is located on a side that is of the middle segment 8313 and that faces the overflow chamber 81. A cross-sectional area of the second diverging segment 8312 gradually increases in the direction away from the middle segment 8313. That is, the first overflow passage 83 mainly includes the middle segment 8313 and diverging segments located on two sides of the middle segment 8313. Cross-sectional areas of both the two diverging segments gradually increase in the direction away from the middle segment 8313. The minimum cross-sectional area of the first overflow passage 83 disposed in this way is a cross-sectional area of the middle segment 8313. In this way, fluid flow in the first overflow passage 83 is stable. In addition, the first diverging segment 8311 may facilitate flow of the fluid into the middle segment 8313, and there is a flow expansion process in the second diverging segment 8312, which may facilitate flow of the fluid into the overflow chamber 81.

According to a specific embodiment of this application, as shown in FIG. 10 and FIG. 11, the overflow valve body 30 further includes a valve ring 34. The valve ring 34 is disposed on the other side of the valve shoulder 33 in the thickness direction, and the valve ring 34 extends in an annular shape along an outer peripheral edge of the valve shoulder 33. That is, the valve ring 34 is disposed below the valve shoulder 33, and the valve ring 34 may fit with the overflow valve fixing sleeve 20. In this way, the overflow valve body 30 can move stably on the overflow valve fixing sleeve 20.

Further, as shown in FIG. 10 and FIG. 11, an overflow sealing groove 32 for assembling the overflow sealing member 100 is disposed on an outer peripheral surface of the valve ring 34. The overflow sealing groove 32 may function to mount the overflow sealing member 100. In this way, reliability of mounting the overflow sealing member 100 on the corresponding overflow valve fixing sleeve 20 and overflow valve body 30 can be ensured, and detachment of the overflow sealing member 100 can be avoided. Assembly difficulty may be further reduced in this mounting manner. In addition, because the overflow sealing member 100 has the deformation groove 101, assembly difficulty of the overflow sealing member 100 and the overflow sealing groove 32 is relatively low, thereby further improving assembly efficiency.

The overflow sealing groove 32 has a first groove wall 321 and a second groove wall 322. The first groove wall 321 is located on a side that is of the overflow sealing groove 32 and that faces the guide post 31, and the second groove wall 322 is located on a side that is of the overflow sealing groove 32 and that faces away from the guide post 31. In a direction perpendicular to an axial direction of the overflow valve body 30, the second groove wall 322 is higher than the first groove wall 321. It may be understood that the overflow sealing groove 32 has the first groove wall 321 and the second groove wall 322. The first groove wall 321 is located on the side that is of the overflow sealing groove 32 and that faces the overflow chamber 81, and the second groove wall 322 is located on the side that is of the overflow sealing groove 32 and that faces away from the overflow chamber 81. The second groove wall 322 is higher than the first groove wall 321. That is, the first groove wall 321 is formed on an upper side of the overflow sealing groove 32, and the second groove wall 322 is formed on a lower side. Compared with the second groove wall 322, the first groove wall 321 is disposed more adjacent to the overflow chamber 81. The overflow sealing member 100 may be mounted in the overflow sealing groove 32 from top to bottom. Because the second groove wall 322 is higher than the first groove wall 321, the overflow sealing member 100 may better pass through the first groove wall 321, and then enter the overflow sealing groove 32. This can facilitate assembly of the overflow sealing member 100, and can reduce assembly difficulty of the adjustment module 1000.

As shown in FIG. 10 and FIG. 11, an annular sealing platform 311 for fitting with a pilot valve plug 90 of the adjustment module 1000 is configured at an end that is of the guide post 31 and that is away from the valve shoulder 33. The annular sealing platform 311 is disposed around the second overflow passage 84, and a distance between an inner peripheral surface of an end that is of the annular sealing platform 311 and that is adjacent to the valve shoulder 33 and a central axis of the annular sealing platform 311 is less than a distance between an inner peripheral surface of an end that is of the annular sealing platform 311 and that is away from the valve shoulder 33 and the central axis of the annular sealing platform 311. For example, a distance between an inner peripheral surface of the annular sealing platform 311 and the central axis of the annular sealing platform 311 gradually increases in a direction away from the valve shoulder 33. The annular sealing platform 311 is disposed for better sealing fit with the pilot valve plug 90, to ensure sealing performance after the pilot valve plug 90 closes the second overflow passage 84. In addition, the inner peripheral surface of the annular sealing platform 311 is configured as an inverted conical surface. In this way, better adaptation to a valve head 92 of the pilot valve plug 90 can be implemented, thereby improving fit reliability between the annular sealing platform 311 and the pilot valve plug 90.

Further, as shown in FIG. 10 and FIG. 11, a distance between an outer peripheral surface of the end that is of the annular sealing platform 311 and that is adjacent to the valve shoulder 33 and the central axis of the annular sealing platform 311 is greater than a distance between an outer peripheral surface of the end that is of the annular sealing platform 311 and that is away from the valve shoulder 33 and the central axis of the annular sealing platform 311. For example, a distance between an outer peripheral surface of the annular sealing platform 311 and the central axis of the annular sealing platform 311 gradually decreases in the direction away from the valve shoulder 33. The outer peripheral surface of the annular sealing platform 311 disposed in this way may perform a flow guiding function. When the second overflow passage 84 is opened, fluid flowing out of the second overflow passage 84 may flow along the outer peripheral surface of the annular sealing platform 311, so that the fluid can better flow into the pilot chamber 82.

According to some embodiments of this application, the adjustment module 1000 includes a control valve 60. The overflow valve body 30 adjusts the fluid flow rate between the compression chamber and the rebound chamber by getting close to and away from the overflow valve seat 10. The control valve 60 controls movement of the overflow valve body 30 to get close to and away from the overflow valve seat 10. The adjustment module 1000 disposed in this way has stable electromagnetic control and a good damping effect. In an example, the control valve 60 in this application may be, for example, a solenoid valve.

According to some embodiments of this application, as shown in FIG. 1 to FIG. 5, the adjustment module 1000 includes a valve body 50 and the control valve 60. The overflow valve fixing sleeve 20 is mounted in the valve body 50, and at least a part of the overflow valve seat 10 is mounted in the valve body 50. The control valve 60 may be mounted in the valve body 50, and the control valve 60 controls movement of the overflow valve body 30 to get close to and away from the overflow valve seat 10. That is, the overflow valve fixing sleeve 20, the overflow valve seat 10, and the control valve 60 are mounted in the valve body 50. The valve body 50 may perform mounting and fastening functions, so that the adjustment module 1000 can be integrally integrated, thereby improving integration of the adjustment module 1000. In addition, the adjustment module 1000 may actively control the movement of the overflow valve body 30 through the control valve 60, thereby controlling the flow rate of fluid flowing between the compression chamber and the rebound chamber.

The control valve 60 is mounted on an outer side of the valve body 50. For example, the control valve 60 is mounted on an upper side of the valve body 50. In this way, separation from a structural member such as the overflow valve fixing sleeve 20 can be implemented, and the control valve 60 can fit with the overflow valve body 30, to control the movement of the overflow valve body 30 in the up-down direction.

According to an optional embodiment of this application, with reference to FIG. 1 to FIG. 7, the overflow valve seat 10 is provided with at least one first communication hole 11 and at least one second communication hole 12. One of the compression chamber and the rebound chamber communicates with the first communication hole 11, and the other of the compression chamber and the rebound chamber communicates with the second communication hole 12. It may be understood that both the compression chamber and the rebound chamber communicate with the overflow valve seat 10. For example, when the compression chamber communicates with the first communication hole 11, the rebound chamber communicates with the second communication hole 12. For another example, when the rebound chamber communicates with the first communication hole 11, the compression chamber communicates with the second communication hole 12. Both the first communication hole 11 and the second communication hole 12 may be disposed to extend through in the up-down direction, to ensure a flow capability of internal fluid in the first communication hole 11 and the second communication hole 12. The overflow valve seat 10 disposed in this way has a simple structure, and can communicate with both the compression chamber and the rebound chamber.

According to an optional embodiment of this application, as shown in FIG. 1 to FIG. 5, the adjustment module 1000 is configured with a first flow path 70 and a second flow path 80, and a flow rate of the first flow path 70 is different from a flow rate of the second flow path 80. The adjustment module 1000 controls the first communication hole 11 and the second communication hole 12 to selectively pass through at least one of the first flow path 70 and the second flow path 80. It may be understood that fluid flowing through the first flow path 70 may correspond to the first flow manner, and fluid flowing through the second flow path 80 may correspond to the second flow manner. That is, both the first flow path 70 and the second flow path 80 are located between the first communication hole 11 and the second communication hole 12, and the adjustment module 1000 controls communication and the fluid flow rate between the compression chamber and the rebound chamber by controlling flow capabilities of the first flow path 70 and the second flow path 80. A control manner is controlling the movement of the overflow valve body 30 through the control valve 60 and fluid pressure. The adjustment module 1000 disposed in this way can better control the fluid flow rate, so that the damper can accurately exhibit "soft" and "hard" characteristics.

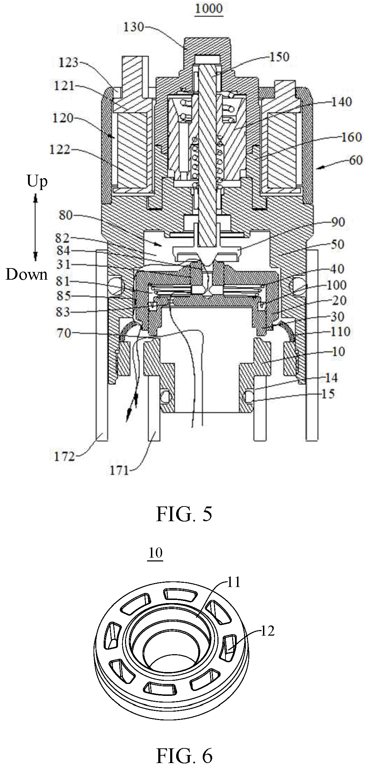

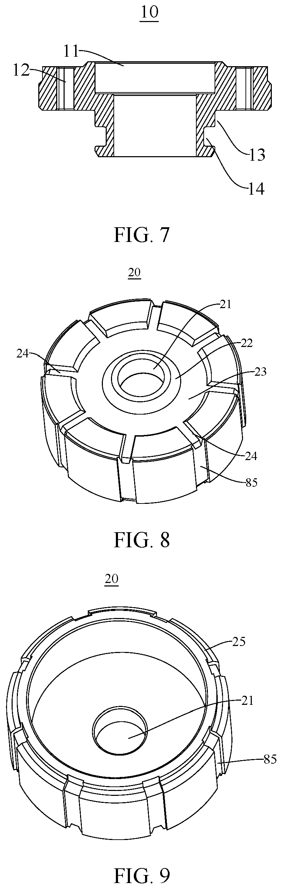

Specifically, as shown in FIG. 6 and FIG. 7, the first communication hole 11 is disposed at a center of the overflow valve seat 10. There are a plurality of second communication holes 12, the plurality of second communication holes 12 are spaced apart in a circumferential direction of the overflow valve seat 10, and the plurality of second communication holes 12 surround the first communication hole 11.

It may be understood that there may be one first communication hole 11. The first communication hole 11 is located at the center of the overflow valve seat 10, that is, a central axis of the first communication hole 11 is collinear with a central axis of the overflow valve seat 10, and a cross-section of the first communication hole 11 may be a circular hole. All of the plurality of second communication holes 12 may be evenly disposed in the overflow valve seat 10. In this way, arrangement of the first communication hole 11 and the second communication hole 12 can be facilitated. In addition, the plurality of second communication holes 12 are disposed, so that the fluid flows into the corresponding compression chamber or rebound chamber from any one of the plurality of second communication holes 12. A cross-section of the second communication hole 12 may be a trapezoid, and a bottom edge of the trapezoid is a circular arc-shaped edge. The overflow valve seat 10 disposed in this way has a simple structure, and can communicate with both the corresponding compression chamber and rebound chamber, thereby ensuring smooth flow of the fluid.

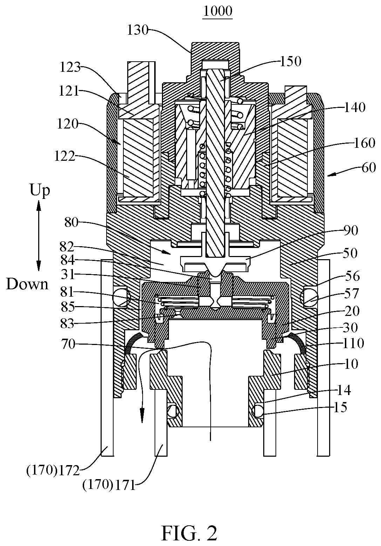

According to a specific embodiment of this application, as shown in FIG. 1 to FIG. 5, a gap between the overflow valve body 30 and the overflow valve seat 10 forms the first flow path 70. The overflow valve body 30 adjusts the flow rate of the first flow path 70 by getting close to and away from the overflow valve seat 10. The adjustment module 1000 shown in FIG. 2 is in a first state. In this case, the control valve 60 is in a non-operating state. Under action of the fluid, the overflow valve body 30 moves upward, a gap is generated between the overflow valve body 30 and the overflow valve seat 10, that is, the first flow path 70 is formed, and fluid entering the first communication hole 11 enters the surrounding second communication hole 12 through the gap. This first flow path 70 has a simple setting manner, is easy to adjust, and facilitates fluid flow. In addition, the fluid flow rate is relatively high, and fluid damping is low. This can ensure basic damping performance of the damper, thereby providing relatively good ride comfort for passengers. The first state may be suitable for traveling of the vehicle on a relatively smooth road surface. Through the plurality of second communication holes 12 disposed in the circumferential direction, fluid flowing out in a circumferential direction of the first communication hole 11 can enter the surrounding second communication hole 12, thereby ensuring smooth flow of the fluid.

According to some embodiments of this application, as shown in FIG. 1 to FIG. 5, the second flow path 80 passes through the overflow valve body 30 and the overflow valve fixing sleeve 20, and the control valve 60 adjusts the flow rate of the second flow path 80.

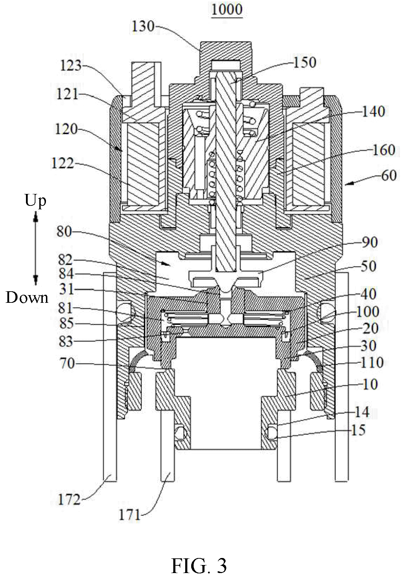

The adjustment module 1000 shown in FIG. 3 is in a second state. In this case, the control valve 60 is in an operating state. Under action of the control valve 60 and the fluid, the overflow valve body 30 moves downward and comes into contact with the overflow valve seat 10, and the gap between the overflow valve body 30 and the overflow valve seat 10 is closed, that is, the first flow path 70 is closed. In this case, the adjustment module 1000 starts to build up pressure.

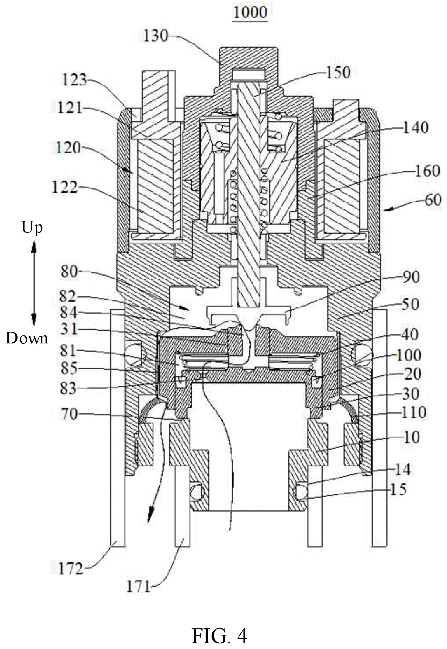

The adjustment module 1000 shown in FIG. 4 is in a third state. In this case, the fluid pushes open the control valve 60, so that the second flow path 80 is opened, and the fluid entering the first communication hole 11 enters the surrounding second communication hole 12 through the second flow path 80. The second flow path 80 is disposed in this way, so that after the first flow path 70 is closed, the second flow path 80 can be opened under pressure of the fluid, to enable the fluid to flow out of the second communication hole 12 in another manner. In this way, the damper can exhibit a "hard" characteristic.

The adjustment module 1000 shown in FIG. 5 is in a fourth state, and the fluid pressure further increases. In this case, the fluid entering the first communication hole 11 pushes the overflow valve body 30 to move upward. In this case, both the first flow path 70 and the second flow path 80 are opened, one part of the fluid entering the first communication hole 11 enters the second communication hole 12 from the first flow path 70, and the other part of the fluid enters the second communication hole 12 from the second flow path 80. In this way, the damper can exhibit a "relatively hard" characteristic. The second state, the third state, and the fourth state may be suitable for traveling of the vehicle on a road with a potholed or uneven road surface.

According to a specific embodiment of this application, as shown in FIG. 1 to FIG. 5, the second flow path 80 includes an overflow chamber 81, a pilot chamber 82, a first overflow passage 83, a second overflow passage 84, and a third overflow passage 85. The overflow valve body 30 and the overflow valve fixing sleeve 20 jointly define the overflow chamber 81. The overflow elastic member 40 is disposed in the overflow chamber 81. The overflow valve fixing sleeve 20 and the valve body 50 jointly define the pilot chamber 82. The first overflow passage 83 is disposed in the overflow valve body 30, and the first overflow passage 83 separately communicates with the first communication hole 11 and the overflow chamber 81. The second overflow passage 84 is disposed in the overflow valve body 30, and the second overflow passage 84 separately communicates with the overflow chamber 81 and the pilot chamber 82. The third overflow passage 85 is disposed in the overflow valve fixing sleeve 20, and the third overflow passage 85 separately communicates with the pilot chamber 82 and the second communication hole 12. The control valve 60 adjusts a flow rate of the second overflow passage 84.

It may be understood that in the adjustment module 1000 shown in FIG. 4, the fluid flowing into the first communication hole 11 sequentially flows through the first overflow passage 83, the overflow chamber 81, the second overflow passage 84, the pilot chamber 82, and the third overflow passage 85, and then flows out of the second communication hole 12. The second flow path 80 disposed in this way may allow the fluid to enter a position between the overflow valve body 30 and the overflow valve fixing sleeve 20, then flow from the overflow valve fixing sleeve 20 to a position between the valve body 50 and the overflow valve fixing sleeve 20, and finally flow out through the second communication hole 12. By extending a path of the second flow path 80, a fluid flow velocity can be reduced, and the fluid flow rate can be reduced, thereby meeting a requirement required for the damper to exhibit a "hard" characteristic.

A minimum cross-sectional area of the second overflow passage 84 is greater than a minimum cross-sectional area of the first overflow passage 83. That is, in a unit time, a minimum flow rate passing through the second overflow passage 84 is greater than a minimum flow rate passing through the first overflow passage 83. In this way, the fluid entering the overflow chamber 81 can smoothly flow out of the overflow chamber 81 through the second overflow passage 84, so that when the fluid passes through the overflow chamber 81, higher stability can be achieved, a fluid flow rate curve is smooth, and curve fluctuation is small, thereby further improving fluid flow smoothness in the adjustment module 1000.

Optionally, as shown in FIG. 1 to FIG. 5, FIG. 8, FIG. 10, and FIG. 11, a guide post 31 is configured on a side that is of the overflow valve body 30 and that faces the overflow valve fixing sleeve 20. The overflow elastic member 40 is disposed around the guide post 31, the overflow valve fixing sleeve 20 is provided with a guide hole 21, and the guide post 31 movably fits with the guide hole 21. The second overflow passage 84 is disposed in the guide post 31. The guide post 31 and the guide hole 21 are disposed to perform a guiding function. This can facilitate movement of the overflow valve body 30 relative to the overflow valve fixing sleeve 20 in the up-down direction. In addition, because the second overflow passage 84 is disposed in the guide post 31, the fluid in the overflow chamber 81 may flow into the pilot chamber 82 through the second overflow passage 84 in the guide post 31. In this way, the second overflow passage 84 can be disposed to be simple, and can be easily controlled by the control valve 60. The guide post 31 may further implement a multi-purpose function.

The guide post 31 and the guide hole 21 may be in clearance fit, to ensure smooth movement of the guide post 31. The guide post 31 may be cylindrical, and the guide hole 21 may be a circular hole. The overflow elastic member 40 is disposed around the guide post 31. In this way, mutual interference between the overflow elastic member 40 and the guide post 31 can be avoided, and mounting and arrangement of the overflow elastic member 40 can be facilitated by using the guide post 31 as a reference, making it convenient to mount and arrange the overflow elastic member 40.

The control valve 60 includes a pilot valve plug 90. The pilot valve plug 90 extends into the pilot chamber 82, and the control valve 60 adjusts the flow rate of the second overflow passage 84 by controlling the pilot valve plug 90 to get close to and away from the guide post 31.

It may be understood that the pilot valve plug 90 is mainly located in the pilot chamber 82, and the pilot valve plug 90 implements, through fitting with the guide post 31, a function of adjusting the flow rate of the second overflow passage 84. For example, as shown in FIG. 2 and FIG. 3, the pilot valve plug 90 continuously comes into contact with the guide post 31 under action of the control valve 60, and closes the second overflow passage 84. In this case, the second flow path 80 is closed. As shown in FIG. 4 and FIG. 5, under action of the fluid, the fluid may push the pilot valve plug 90, so that a gap is generated between the pilot valve plug 90 and the guide post 31, and the second overflow passage 84 is opened. In this case, the second flow path 80 is opened. The pilot valve plug 90 is disposed, so that the second overflow passage 84 can be well closed, to ensure sealing performance of closure. In addition, the second flow path 80 may be opened under the action of the fluid, thereby implementing flow path switching and ensuring adjustment performance of the adjustment module 1000.

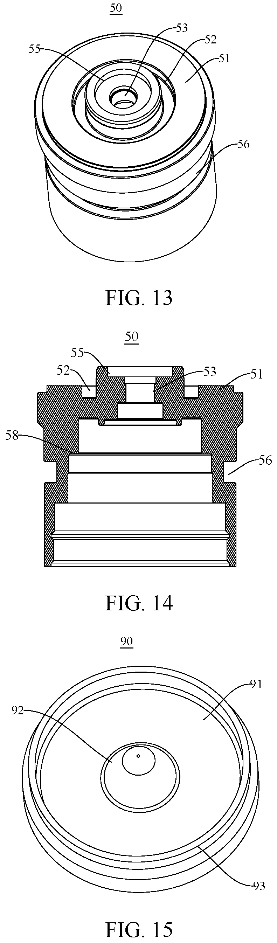

According to some embodiments of this application, specifically, as shown in FIG. 15 and FIG. 16, the pilot valve plug 90 includes a valve plate 91, a valve head 92, and a flow-guiding ring 93. The valve head 92 is disposed on a side that is of the valve plate 91 and that faces the guide post 31, and the valve head 92 adjusts the flow rate of the second overflow passage 84 by extending into and getting away from the second overflow passage 84. The flow-guiding ring 93 is disposed on a side that is of the valve plate 91 and that faces the overflow valve fixing sleeve 20, and the flow-guiding ring 93 is disposed around the valve head 92.

It may be understood that the pilot valve plug 90 mainly includes the valve plate 91, the valve head 92, and the flow-guiding ring 93. Both the valve head 92 and the flow-guiding ring 93 are disposed on the side that is of the valve plate 91 and that faces the guide post 31, and the valve head 92 may function to adjust the second overflow passage 84 (that is, an outlet of the axial segment 842). In a form of protruding from the valve plate 91, the valve head 92 may better fit with the second overflow passage 84, and may extend into the second overflow passage 84 to close the second overflow passage 84. In addition, under the action of the fluid, the valve head 92 may move upward to generate a gap, so that the fluid enters the pilot chamber 82. This valve body 50 has a simple structure and achieves a good adjustment effect. Because the flow-guiding ring 93 is disposed around the valve head 92, the fluid flowing into the pilot chamber 82 may flow along the valve head 92, and then flow to the flow-guiding ring 93 under guidance of the valve plate 91. The flow-guiding ring 93 may direct the fluid to change a direction, and guide the fluid to the third overflow passage 85, thereby reducing a pressure loss of the fluid. This can help the fluid quickly enter the third overflow passage 85.

Optionally, as shown in FIG. 15, a cross-sectional area of an end that is of the valve head 92 and that is adjacent to the guide post 31 is less than a cross-sectional area of an end that is of the valve head 92 and that is away from the guide post 31. For example, a cross-sectional area of the valve head 92 gradually decreases in a direction toward the guide post 31. That is, the cross-sectional area of the valve head 92 gradually decreases in a top-to-bottom direction, and the valve head 92 disposed in this way is generally in an inverted conical shape. This can help the valve head 92 extend into the axial segment 842 of the second overflow passage 84. When the axial segment 842 is closed and opened, the fluid flow rate of the second overflow passage 84 may be changed through movement of the valve head 92. Therefore, the fluid flow rate between the compression chamber and the rebound chamber can be better adjusted based on an actual situation.

In some embodiments of this application, the flow-guiding ring 93 may be correspondingly disposed at an outer peripheral edge of the valve plate 91, and a height of the flow-guiding ring 93 in an up-down direction may be less than a height of the valve head 92 in the up-down direction. In this way, there is sufficient space between the flow-guiding ring 93 and the overflow valve fixing sleeve 20, to better perform a guiding function.

According to an optional embodiment of this application, as shown in FIG. 1 to FIG. 5, FIG. 8, and FIG. 9, there is at least one third overflow passage 85. The at least one third overflow passage 85 is a groove disposed on an outer side surface that is of the overflow valve fixing sleeve 20 and that fits with the valve body 50, and two ends of the third overflow passage 85 respectively penetrate two axial ends of the overflow valve fixing sleeve 20. That is, at least one groove is disposed on an outer periphery of the overflow valve fixing sleeve 20, and the groove extends through from top to bottom. The fluid flowing into the pilot chamber 82 may flow from top to bottom along the groove until the fluid reaches the second communication hole 12. The third overflow passage 85 disposed in this way has a simple structure, and may facilitate smooth flow of the fluid to the second communication hole 12. There are a plurality of grooves, and the plurality of grooves may be spaced apart on the outer periphery of the overflow valve fixing sleeve 20.

According to a specific embodiment of this application, as shown in FIG. 8, a surface that is of the overflow valve fixing sleeve 20 and that faces the pilot chamber 82 is provided with an annular flow-guiding platform 22, an annular flow-guiding groove 23, and at least one flow-guiding branch groove 24. The annular flow-guiding platform 22 is disposed around the second overflow passage 84, and an outer diameter of an end that is of the annular flow-guiding platform 22 and that extends into the pilot chamber 82 is less than an outer diameter of the other end. For example, an outer diameter of the annular flow-guiding platform 22 gradually decreases in a direction inside the pilot chamber 82. The annular flow-guiding groove 23 is disposed around the annular flow-guiding platform 22. One end of the flow-guiding branch groove 24 communicates with the annular flow-guiding groove 23, and the other end of the flow-guiding branch groove 24 communicates with the third overflow passage 85.

It may be understood that on a top surface of the overflow valve fixing sleeve 20, the annular flow-guiding platform 22, the annular flow-guiding groove 23, and the at least one flow-guiding branch groove 24 are sequentially distributed from a radial inner side to a radial outer side. The annular flow-guiding platform 22 is disposed to facilitate fitting with the valve head 92, making it convenient for the valve body 50 to enter the axial segment 842. In addition, a flow guiding function can be performed. The annular flow-guiding platform 22 has a flow-guiding surface, and a cross-sectional area of the flow-guiding surface gradually increases in the top-to-bottom direction. In this way, the fluid can be guided into the annular flow-guiding groove 23 in an inclined manner. The annular flow-guiding groove 23 may perform a merging function, and the flow-guiding branch groove 24 may perform a diverging function, so that the fluid enters a corresponding third overflow passage 85. Through merging followed by diverging, flow rates of fluid flowing into third overflow passages 85 may be generally even, thereby ensuring smooth flow of the fluid.

As shown in FIG. 8, there are a plurality of third overflow passages 85, and the plurality of third overflow passages 85 are spaced apart in a circumferential direction of the overflow valve fixing sleeve 20. There are a plurality of flow-guiding branch grooves 24, and the plurality of flow-guiding branch grooves 24 are spaced apart in the circumferential direction of the overflow valve fixing sleeve 20. One end of each flow-guiding branch groove 24 communicates with the annular flow-guiding groove 23, and the other end of each flow-guiding branch groove 24 communicates with a corresponding third overflow passage 85. That is, the overflow valve fixing sleeve 20 is provided with a plurality of third overflow passages 85 and a plurality of flow-guiding branch grooves 24, and the plurality of third overflow passages 85 communicate with the plurality of flow-guiding branch grooves 24 in a one-to-one correspondence. In this way, a diverging function can be performed, and fluid flow rates can be ensured to be generally even, thereby ensuring smooth flow of the fluid.

According to an optional embodiment of this application, as shown in FIG. 1 to FIG. 5, the adjustment module 1000 for a damper further includes an overflow valve distance adjustment ring 110. The overflow valve distance adjustment ring 110 is disposed in the valve body 50, and the overflow valve distance adjustment ring 110 is supported between the overflow valve seat 10 and the overflow valve fixing sleeve 20.

It may be understood that both the overflow valve seat 10 and the overflow valve fixing sleeve 20 are disposed in the valve body 50, and a relative distance between the overflow valve seat 10 and the overflow valve fixing sleeve 20 may be adjusted through the overflow valve distance adjustment ring 110. In this way, a valve opening stroke between the overflow valve body 30 and the overflow valve seat 10 can be finely adjusted, thereby enabling the control valve 60 to quickly adjust the flow rate through the valve opening stroke and adjust a damping value of the control valve 60 based on the flow rate.

Further, the overflow valve seat 10 is in threaded fit with the valve body 50, and the overflow valve seat 10 adjusts a deformation amount of the overflow valve distance adjustment ring 110 by adjusting a degree of tightening with the valve body 50, to adjust a distance from each of the overflow valve fixing sleeve 20 and the overflow valve body 30 to the overflow valve seat 10. That is, the overflow valve distance adjustment ring 110 is disposed on an upper end face of the overflow valve seat 10, a lower end face of the overflow valve distance adjustment ring 110 abuts against the upper end face of the overflow valve seat 10, and an upper end face of the overflow valve distance adjustment ring 110 abuts against a lower region of the overflow valve fixing sleeve 20. The overflow valve seat 10 and the valve body 50 are rotationally threaded to lock the overflow valve distance adjustment ring 110 and the overflow valve fixing sleeve 20. By locking torque of the overflow valve seat 10, the overflow valve distance adjustment ring 110 may be compressed and deformed. Therefore, the valve opening stroke between the overflow valve body 30 and the overflow valve seat 10 is finely adjusted, thereby enabling the control valve 60 to quickly adjust the flow rate through the valve opening stroke and adjust the damping value of the control valve 60 based on the flow rate.

Optionally, a height of the overflow valve distance adjustment ring 110 in an axial direction of the overflow valve distance adjustment ring 110 is 2.5 mm to 5 mm. The axial direction is the up-down direction shown in FIG. 1. By controlling the height of the overflow valve distance adjustment ring 110 to 2.5 mm to 5 mm, a distance between the overflow valve body 30 and the overflow valve fixing sleeve 20 can be further controlled, so that a movement distance of the overflow valve body 30 relative to the overflow valve seat 10 can be further controlled, thereby facilitating quick response of the adjustment module 1000. The height of the overflow valve distance adjustment ring 110 may be 2.5 mm, 3 mm, 4 mm, 5 mm, or the like.

As shown in FIG. 1 to FIG. 5, a section that is of the overflow valve distance adjustment ring 110 and that is parallel to the axial direction of the overflow valve distance adjustment ring 110 is configured to be arc-shaped or linear, and a distance between an end that is of the overflow valve distance adjustment ring 110 and that is adjacent to the overflow valve seat 10 and a central axis of the overflow valve distance adjustment ring 110 is greater than a distance between an end that is of the overflow valve distance adjustment ring 110 and that is adjacent to the overflow valve fixing sleeve 20 and the central axis of the overflow valve distance adjustment ring 110. For example, a distance between the overflow valve distance adjustment ring 110 and the central axis of the overflow valve distance adjustment ring 110 gradually decreases in a direction from the overflow valve seat 10 to the overflow valve fixing sleeve 20. A section of the overflow valve distance adjustment ring 110 shown in FIG. 1 is arc-shaped, and the section of the overflow valve distance adjustment ring 110 may alternatively be in an inclined linear shape. The overflow valve distance adjustment ring 110 with an arc-shaped or linear section may be well supported between the overflow valve body 30 and the overflow valve fixing sleeve 20. In addition, the overflow valve distance adjustment ring 110 disposed in this way is easily deformed and adjusted, so that a distance between the overflow valve seat 10 and the overflow valve fixing sleeve 20 can be better adjusted. In addition, in the top-to-bottom direction, a cross-sectional area of the overflow valve distance adjustment ring 110 gradually increases, so that the deformed overflow valve distance adjustment ring 110 can be better supported on the overflow valve seat 10, providing higher stability when the distance is adjusted by rotating the overflow valve seat 10.

Specifically, as shown in FIG. 1 and FIG. 9, a first abutting inclined surface 111 is configured at an end that is of the overflow valve distance adjustment ring 110 and that faces the overflow valve fixing sleeve 20, and a distance between the first abutting inclined surface 111 and the central axis of the overflow valve distance adjustment ring 110 gradually increases in a direction from the overflow valve seat 10 to the overflow valve fixing sleeve 20. A second abutting inclined surface 25 is configured at an end that is of the overflow valve fixing sleeve 20 and that faces the overflow valve distance adjustment ring 110, and a distance between the second abutting inclined surface 25 and a central axis of the overflow valve fixing sleeve 20 gradually increases in the direction from the overflow valve seat 10 to the overflow valve fixing sleeve 20. The first abutting inclined surface 111 fits with the second abutting inclined surface 25.

It may be understood that the first abutting inclined surface 111 is disposed at an upper end of the overflow valve distance adjustment ring 110, and a section of the first abutting inclined surface 111 extends downward in an inclined manner in a radial direction from outside to inside. The second abutting inclined surface 25 is disposed at an outer periphery of a lower end of the overflow valve fixing sleeve 20, and a section of the second abutting inclined surface 25 extends downward in an inclined manner in the radial direction from outside to inside. In this way, the first abutting inclined surface 111 and the second abutting inclined surface 25 can abut against and fit with each other, thereby facilitating quick alignment of the overflow valve distance adjustment ring 110 with the overflow valve fixing sleeve 20. In addition, a force receiving direction may be changed through fitting between the two abutting inclined surfaces, to form an inward component force and an upward component force, thereby better adjusting the distance between the overflow valve seat 10 and the overflow valve fixing sleeve 20.

Optionally, as shown in FIG. 1, FIG. 13, and FIG. 14, an annular stop platform 58 is configured on an inner wall surface of the valve body 50. The annular stop platform 58 abuts against a side that is of the overflow valve fixing sleeve 20 and that faces away from the overflow valve seat 10. That is, the annular stop platform 58 is disposed in the valve body 50. When the overflow valve fixing sleeve 20 is mounted, the overflow valve fixing sleeve 20 abuts against the annular stop platform 58. In this way, it can be determined whether the overflow valve fixing sleeve 20 is mounted in place. In addition, such an arrangement can avoid a case in which the overflow valve fixing sleeve 20 moves upward when the overflow valve body 30 moves upward, thereby further ensuring structural reliability of the adjustment module 1000.

There may be a specific gap between the lower end of the overflow valve fixing sleeve 20 and the overflow valve seat 10, so that fluid in the first flow path 70 can quickly enter the second communication hole 12. The lower end of the overflow valve fixing sleeve 20 and the overflow valve seat 10 may alternatively abut against and fit with each other. In this case, the overflow valve fixing sleeve 20 may be provided with a hole, and the hole may allow fluid to flow to the second communication hole 12.

Specifically, as shown in FIG. 1, the overflow valve fixing sleeve 20 is in interference fit with the valve body 50. This interference fit manner is simple and reliable. This can enable the valve body 50 and the overflow valve fixing sleeve 20 to be assembled into an integral structure, and can facilitate subsequent mounting of the overflow valve body 30 and the overflow valve seat 10.

According to an optional embodiment of this application, as shown in FIG. 1, the control valve 60 includes an electromagnetic assembly 120, a valve core cover 130, a valve core 140, a guide rod 150, and a pilot valve plug 90. The electromagnetic assembly 120 is mounted in the valve body 50, the valve core cover 130 is mounted in the electromagnetic assembly 120, the valve core 140 is movably mounted in the valve core cover 130, the guide rod 150 is connected to the valve core 140, and the pilot valve plug 90 is connected to the guide rod 150. When the electromagnetic assembly 120 is energized, the valve core 140 generates magnetism and attracts the valve body 50. When the valve core 140 moves, movement of the overflow valve body 30 is controlled through the guide rod 150 and the pilot valve plug 90.

It may be understood that the valve body 50 may be made of a magnetic material, and the valve core 140 may also be made of a magnetic material. For example, the valve body 50 and the valve core 140 may be made of metal iron. In this way, after the electromagnetic assembly 120 is energized, the valve core 140 may generate magnetism to attract the valve body 50, so that the valve core 140 can move in a direction close to the valve body 50. The valve core 140 drives the guide rod 150 and the pilot valve plug 90 to move synchronously, so that the pilot valve plug 90 can close the second overflow passage 84, to implement adjustment of the fluid flow rate.

The valve core cover 130 may fasten a relative position between the electromagnetic assembly 120 and the valve core 140, and may define a movement direction of the valve core 140. The valve core cover 130 may be made of a magnetic material. For example, the valve core cover 130 may be made of metal iron. In this way, the valve core cover 130 also generates magnetism under action of the electromagnetic assembly 120, the valve core cover 130 comes into contact with the valve core 140, and a magnetic force between the valve core 140 and the valve body 50 is stronger.

The control valve 60 disposed in this way may adjust the fluid flow rate of the second overflow passage 84 in an electromagnetic induction manner. The electromagnetic induction manner is accurate and fast, thereby ensuring adjustment performance of the adjustment module 1000.

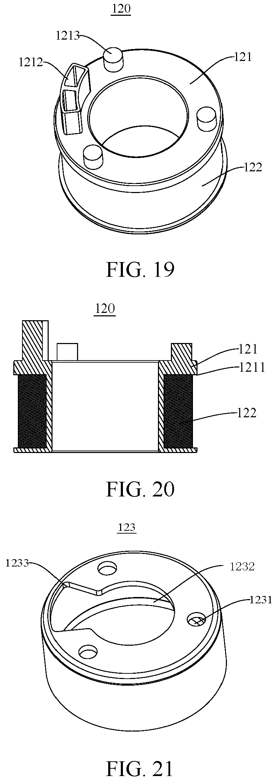

According to some embodiments of this application, as shown in FIG. 19 to FIG. 24, the electromagnetic assembly 120 includes an insulating bracket 121 and a magnetically conductive cover 123. A coil groove 1211 is disposed on an outer sidewall of the insulating bracket 121, and the magnetically conductive cover 123 is mounted on the insulating bracket 121 and covers the coil groove 1211. At least one anti-rotation positioning post 1213 is configured at one end of the insulating bracket 121, the magnetically conductive cover 123 is provided with at least one anti-rotation positioning hole 1231, and the anti-rotation positioning post 1213 passes through the anti-rotation positioning hole 1231. A part that is of the anti-rotation positioning post 1213 and that extends out of the anti-rotation positioning hole 1231 is configured with an axial positioning portion 1214, and the magnetically conductive cover 123 is stopped by the axial positioning portion 1214. Through fitting between the at least one anti-rotation positioning post 1213 and the at least one anti-rotation positioning hole 1231, the insulating bracket 121 and the magnetically conductive cover 123 may limit each other in a circumferential direction, to avoid relative rotation between the insulating bracket 121 and the magnetically conductive cover 123 and further avoid a positional change of the electromagnetic assembly 120 after mounting. The axial positioning portion 1214 is disposed to further enable the magnetically conductive cover 123 and the insulating bracket 121 to stop and fit with each other in an axial direction. This can avoid axial endplay of the insulating bracket 121 relative to the magnetically conductive cover 123, and can further ensure positional stability of the insulating bracket 121 and a coil 122, thereby improving overall stability of the adjustment module 1000 and preventing a problem of electromagnetic force fluctuation caused by radial and axial displacement of the coil 122 due to rotation of the coil 122 when the control valve 60 performs damping operation.

According to an optional embodiment of this application, the axial positioning portion 1214 is integrally formed with the anti-rotation positioning post 1213. It may be understood that the anti-rotation positioning post 1213 disposed in this way may be used for a plurality of purposes: preventing rotation and preventing axial movement, thereby simplifying a structure of the electromagnetic assembly 120 and achieving a good positioning effect. In addition, there are a plurality of manners for integral forming. The axial positioning portion 1214 may be formed on the anti-rotation positioning post 1213 through hot melting, or may be formed on the anti-rotation positioning post 1213 through welding or riveting. The axial positioning portion 1214 may be configured to be cylindrical, and a cross-sectional area of the axial positioning portion 1214 is greater than a cross-sectional area of the anti-rotation positioning post 1213. The axial positioning portion 1214 may alternatively be configured to be in a form in which a cross-section is a polygon such as a rectangle.

Optionally, as shown in FIG. 19 to FIG. 24, there are a plurality of anti-rotation positioning posts 1213 that are spaced apart in a circumferential direction of the insulating bracket 121, and there are a plurality of anti-rotation positioning holes 1231 that are spaced apart in a circumferential direction of the magnetically conductive cover 123. The plurality of anti-rotation positioning posts 1213 pass through the plurality of anti-rotation positioning holes 1231 in a one-to-one correspondence. The plurality of anti-rotation positioning posts 1213 fit with the plurality of anti-rotation positioning holes 1231 in a one-to-one correspondence, so that the magnetically conductive cover 123 and the insulating bracket 121 can better limit and fit with each other, thereby ensuring positional stability of the insulating bracket 121 and the coil 122 and preventing a problem of electromagnetic force fluctuation caused by radial displacement of the coil 122 due to rotation of the coil 122 when the control valve 60 performs damping operation. For example, there may be two anti-rotation positioning holes 1231 and two anti-rotation positioning posts 1213, and the anti-rotation positioning holes 1231 and the anti-rotation positioning posts 1213 are asymmetrically distributed. For another example, there may be three anti-rotation positioning holes 1231 and three anti-rotation positioning posts 1213.

As shown in FIG. 19 to FIG. 21, the plurality of anti-rotation positioning posts 1213 are evenly spaced apart in the circumferential direction of the insulating bracket 121, and the plurality of anti-rotation positioning holes 1231 are evenly spaced apart in the circumferential direction of the magnetically conductive cover 123. The plurality of anti-rotation positioning posts 1213 and the plurality of anti-rotation positioning holes 1231 are evenly spaced apart in the circumferential directions. This can reduce arrangement difficulty and perform a relatively good anti-rotation function. For example, there may be three anti-rotation positioning holes 1231 and three anti-rotation positioning posts 1213, and the three anti-rotation positioning holes 1231 and the three anti-rotation positioning posts 1213 are evenly distributed in the circumferential directions.

Specifically, as shown in FIG. 19 to FIG. 21, a cross-section of the anti-rotation positioning post 1213 and a cross-section of the anti-rotation positioning hole 1231 are mutually adapted circular shapes. It is easier to implement adaptation between the anti-rotation positioning post 1213 and the anti-rotation positioning hole 1231 with circular cross-sections, which can reduce alignment difficulty between the anti-rotation positioning post 1213 and the anti-rotation positioning hole 1231.

According to some specific embodiments of this application, as shown in FIG. 19 to FIG. 24, the electromagnetic assembly 120 includes an insulating bracket 121, a coil 122, and a magnetically conductive cover 123. The insulating bracket 121 is sleeved on the valve core cover 130, and a coil groove 1211 is disposed on an outer sidewall of the insulating bracket 121. The coil 122 is wound in the coil groove 1211. The magnetically conductive cover 123 is mounted in the valve body 50, and the magnetically conductive cover 123 covers the coil 122.

The insulating bracket 121 may be made of an insulating material, and is configured to limit and fasten the coil 122 and a wire. The coil 122 is a copper wire, and the wire includes an insulating sleeve and a metal conductive member located in the insulating sleeve. The coil 122 is disposed to generate a more stable and reliable magnetic field. In addition, the coil 122 is connected to an external power source through the wire, thereby reducing a risk of electric shock, and improving safety of the damper.

The magnetically conductive cover 123 may cover an outer side of the insulating bracket 121 and the coil 122, and the magnetically conductive cover 123 is connected to the valve body 50. In this way, the magnetically conductive cover 123 can function to limit the insulating bracket 121 and the coil 122, thereby ensuring positional stability of the insulating bracket 121 and the coil 122 relative to the valve body 50. In addition, the magnetically conductive cover 123 has a magnetic conductive effect, thereby further improving an electromagnetic induction effect.

Further, as shown in FIG. 19 to FIG. 24, the insulating bracket 121 (for example, one end of the insulating bracket 121) is configured with a wire post 1212, and the magnetically conductive cover 123 is provided with an avoidance hole 1233. The wire post 1212 extends out of the magnetically conductive cover 123 from the avoidance hole 1233, and the wire post 1212 is provided with a wire hole for the coil 122 to extend out. The wire is configured to be connected to the coil 122, and the wire hole in the wire post 1212 may allow the wire to pass through, to guide and constrain a wire direction. The avoidance hole 1233 of the magnetically conductive cover 123 may enable the wire post 1212 to smoothly pass through. In addition, the wire post 1212 and the avoidance hole 1233 may perform a limiting function. After the magnetically conductive cover 123 is mounted in the valve body 50, the magnetically conductive cover 123 may limit the insulating bracket 121 through fitting between the wire post 1212 and the avoidance hole 1233.

As shown in FIG. 19, there are at least two wire holes, and the at least two wire holes respectively extend out from two ends of the coil 122. The at least two wire holes may be provided for wires at different ends of the coil 122 to extend out. In this way, confusion between wires at the two ends can be avoided, and the wires can be better constrained.

Specifically, as shown in FIG. 19, the wire post 1212 extends in the circumferential direction of the insulating bracket 121, and the at least two wire holes are arranged in the circumferential direction of the insulating bracket 121. The wire post 1212 is generally in a circular arc shape, and the wire post 1212 is disposed around a central axis of the insulating bracket 121. The at least two wire holes disposed in this way may be better provided for corresponding wires to pass through, which may help guide a wire direction.

Optionally, as shown in FIG. 19 to FIG. 24, at least one anti-rotation positioning post 1213 is configured on a side that is of the insulating bracket 121 and that faces away from the valve body 50, the magnetically conductive cover 123 is provided with at least one anti-rotation positioning hole 1231, and the anti-rotation positioning post 1213 passes through the anti-rotation positioning hole 1231. A part that is of the anti-rotation positioning post 1213 and that extends out of the anti-rotation positioning hole 1231 is configured with an axial positioning portion 1214 through deformation, and the magnetically conductive cover 123 is stopped by the axial positioning portion 1214. Optionally, the axial positioning portion 1214 may be hot-melt adhesive, and stops and fits with the magnetically conductive cover 123 in an axial direction through hot melting.

Through fitting between the at least one anti-rotation positioning post 1213 and the at least one anti-rotation positioning hole 1231, the insulating bracket 121 and the magnetically conductive cover 123 may limit each other in a circumferential direction, to avoid relative rotation between the insulating bracket 121 and the magnetically conductive cover 123 and further avoid a positional change of the electromagnetic assembly 120 after mounting. The axial positioning portion 1214 is disposed to further enable the magnetically conductive cover 123 and the insulating bracket 121 to stop and fit with each other in an axial direction. This can avoid axial endplay of the insulating bracket 121 relative to the magnetically conductive cover 123, and can further ensure positional stability of the insulating bracket 121 and a coil 122, thereby improving overall stability of the adjustment module 1000 and preventing a problem of electromagnetic force fluctuation caused by radial and axial displacement of the coil 122 due to rotation of the coil 122 when the control valve 60 performs damping operation.

According to an optional embodiment of this application, the axial positioning portion 1214 is integrally formed with the anti-rotation positioning post 1213. It may be understood that the anti-rotation positioning post 1213 disposed in this way may be used for a plurality of purposes: preventing rotation and preventing axial movement, thereby simplifying a structure of the electromagnetic assembly 120 and achieving a good positioning effect. In addition, there are a plurality of manners for integral forming. The axial positioning portion 1214 may be formed on the anti-rotation positioning post 1213 through hot melting, or may be formed on the anti-rotation positioning post 1213 through welding or riveting. The axial positioning portion 1214 may be configured to be cylindrical, and a cross-sectional area of the axial positioning portion 1214 is greater than a cross-sectional area of the anti-rotation positioning post 1213. The axial positioning portion 1214 may alternatively be configured to be in a form in which a cross-section is a polygon such as a rectangle.

As shown in FIG. 19 to FIG. 24, there are a plurality of anti-rotation positioning posts 1213, and the plurality of anti-rotation positioning posts 1213 are spaced apart in a circumferential direction of the insulating bracket 121. There are a plurality of anti-rotation positioning holes 1231, and the plurality of anti-rotation positioning holes 1231 are spaced apart in a circumferential direction of the magnetically conductive cover 123. The plurality of anti-rotation positioning posts 1213 pass through the plurality of anti-rotation positioning holes 1231 in a one-to-one correspondence. The plurality of anti-rotation positioning posts 1213 fit with the plurality of anti-rotation positioning holes 1231 in a one-to-one correspondence, so that the magnetically conductive cover 123 and the insulating bracket 121 can better limit and fit with each other, thereby ensuring positional stability of the insulating bracket 121 and the coil 122 and preventing a problem of electromagnetic force fluctuation caused by radial displacement of the coil 122 due to rotation of the coil 122 when the control valve 60 performs damping operation. For example, there may be two anti-rotation positioning holes 1231 and two anti-rotation positioning posts 1213, and the anti-rotation positioning holes 1231 and the anti-rotation positioning posts 1213 are asymmetrically distributed. For another example, there may be three anti-rotation positioning holes 1231 and three anti-rotation positioning posts 1213.

Specifically, as shown in FIG. 1 and FIG. 13, a support boss 51 is configured on a side that is of the valve body 50 and that faces the control valve 60. The insulating bracket 121 is disposed on the support boss 51, and the magnetically conductive cover 123 is sleeved on the support boss 51. The support boss 51 may function to support the insulating bracket 121, and may facilitate mounting of the insulating bracket 121. In addition, the magnetically conductive cover 123 is sleeved on the support boss 51 to be connected to the valve body 50. In this way, assembly difficulty of the magnetically conductive cover 123 and the valve body 50 can be reduced, and the insulating bracket 121 and the coil 122 can be better limited. As shown in FIG. 13 and FIG. 14, the support boss 51 may be annular, a body structure of the insulating bracket 121 is also annular, and the support boss 51 and the insulating bracket 121 are mutually adapted.

Further, as shown in FIG. 1, the control valve 60 further includes a magnetic isolation ring 160. The magnetic isolation ring 160 is disposed around the valve core 140, and the magnetic isolation ring 160 is located between the valve core cover 130 and the valve body 50. The magnetic isolation ring 160 is disposed, so that when the coil 122 is energized, a magnetic field generated by the coil 122 can be prevented from affecting the valve body 50. In this way, the magnetic field generated by the coil 122 mainly acts on the valve core 140, and a larger magnetic force is generated between the valve core 140 and the valve body 50.

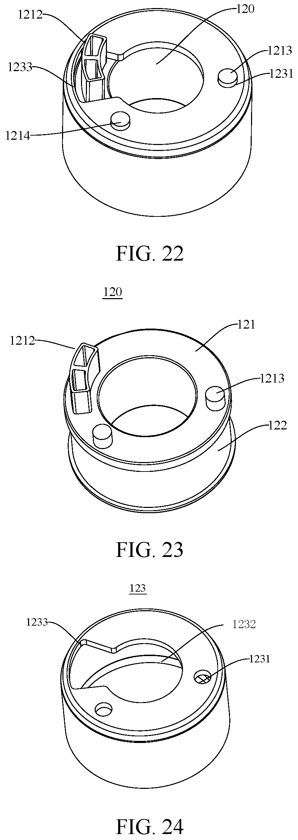

As shown in FIG. 24, FIG. 28, and FIG. 29, one of the magnetic isolation ring 160 and the valve core cover 130 is provided with an inner assembly ring 1232, and the other is provided with an outer assembly ring 161. The outer assembly ring 161 is sleeved on the inner assembly ring 1232 and is in interference fit with the inner assembly ring 1232. For example, the magnetic isolation ring 160 is provided with the outer assembly ring 161, and the valve core cover 130 is provided with the inner assembly ring 1232. The inner assembly ring 1232 and the outer assembly ring 161 are disposed, so that the magnetic isolation ring 160 and the valve core cover 130 can be effectively integrally assembled, achieving higher reliability of the magnetic isolation ring 160 and the valve core cover 130. In addition, the interference fit manner is simple and reliable. In addition, inner peripheral surfaces and outer peripheral surfaces of the magnetic isolation ring 160 and the valve core cover 130 disposed in this way may be disposed to be coplanar, thereby simplifying a structure of the control valve 60 and avoiding impact on movement of the valve core 140.

As shown in FIG. 1, FIG. 13, FIG. 14, FIG. 28, and FIG. 29, an annular support groove 52 is disposed on a side that is of the valve body 50 and that faces the magnetic isolation ring 160, and an annular support platform 162 is configured on a side that is of the magnetic isolation ring 160 and that faces the valve body 50. The annular support platform 162 fits with the annular support groove 52, and the annular support platform 162 is in interference fit with the annular support groove 52.

Through fitting between the annular support platform 162 and the annular support groove 52, the valve body 50 can effectively support the magnetic isolation ring 160, so that the valve core cover 130 can be further supported, and radial movement of the magnetic isolation ring 160 relative to the valve body 50 can be avoided. The interference fit manner used between the annular support platform 162 and the annular support groove 52 is simple and reliable, and a manner of mounting the control valve 60 and the valve body 50 disposed in this way is simple and reliable.

As shown in FIG. 1, FIG. 13, FIG. 25, and FIG. 30, a guide rod groove 131 is configured on an inner wall surface of the valve core cover 130, and a first guide sleeve 132 is disposed in the guide rod groove 131. The valve body 50 is configured with a guide rod hole 53, and a second guide sleeve 54 is disposed in the guide rod hole 53. The guide rod 150 movably fits with the first guide sleeve 132 and the second guide sleeve 54.

It may be understood that the valve core cover 130 is provided with the first guide sleeve 132 in a manner in which the guide rod groove 131 is disposed, and the valve body 50 is provided with the second guide sleeve 54 in a manner in which the guide rod hole 53 is disposed. The first guide sleeve 132 and the second guide sleeve 54 are spaced apart in an up-down direction, and the guide rod 150 may pass through the first guide sleeve 132 and the second guide sleeve 54. In this way, the first guide sleeve 132 and the second guide sleeve 54 can resolve a mounting problem of the guide rod 150, the first guide sleeve 132 and the second guide sleeve 54 can allow the guide rod 150 to move up and down, and the first guide sleeve 132 and the second guide sleeve 54 may function to constrain a movement direction of the guide rod 150, thereby avoiding a problem of inclination of the guide rod 150 in a process of moving up and down, improving control stability of the control valve 60, and further improving stability of adjusting the fluid flow rate of the second overflow passage 84 by the pilot valve plug 90. The first guide sleeve 132 and the guide rod groove 131 may be in interference fit with each other, and the second guide sleeve 54 and the guide rod hole 53 may be in interference fit with each other, thereby ensuring mounting stability of the first guide sleeve 132 and the second guide sleeve 54.

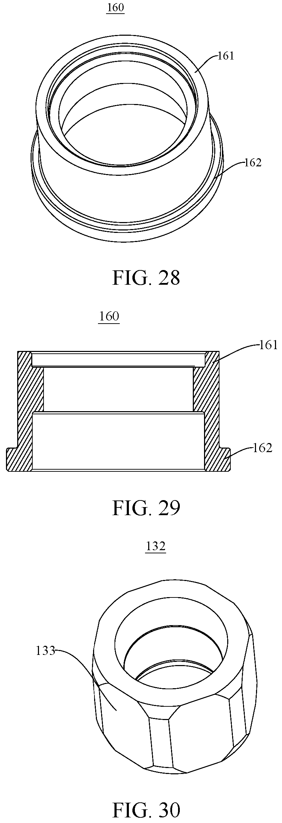

With reference to FIG. 1 and FIG. 30, at least one first flow-through groove 133 is disposed on an outer side surface that is of the first guide sleeve 132 and that fits with the valve core cover 130, and two ends of the first flow-through groove 133 respectively penetrate two axial ends of the first guide sleeve 132. At least one second flow-through groove is disposed on an outer side surface that is of the second guide sleeve 54 and that fits with the valve body 50, and two ends of the second flow-through groove respectively penetrate two axial ends of the second guide sleeve 54. The first flow-through groove 133 is disposed, so that fluid can be allowed to flow between upper space of the first guide sleeve 132 and lower space of the first guide sleeve 132. This can reduce resistance to movement of the guide rod 150 and the valve core 140, thereby improving operational accuracy of the control valve 60. In addition, the second flow-through groove is disposed, so that fluid can be allowed to flow between upper space of the second guide sleeve 54 and lower space of the second guide sleeve 54. This can reduce resistance to movement of the guide rod 150 and the valve core 140, thereby improving operational accuracy of the control valve 60.

Specifically, there are a plurality of first flow-through grooves 133, and the plurality of first flow-through grooves 133 are spaced apart in a circumferential direction of the first guide sleeve 132. There are a plurality of second flow-through grooves, and the plurality of second flow-through grooves are spaced apart in a circumferential direction of the second guide sleeve 54. It may be understood that the plurality of first flow-through grooves 133 and the plurality of second flow-through grooves are disposed, so that fluid can be allowed to flow in the circumferential direction through a plurality of corresponding flow-through grooves, thereby improving evenness of fluid flow and avoiding a problem of unstable fluid flow.

As shown in FIG. 30, an outer peripheral surface of the first guide sleeve 132 is disposed as a non-circumferential surface, and includes alternately distributed circular arc-shaped surfaces and inclined flat surfaces. Two adjacent circular arc-shaped surfaces may be in interference fit with a corresponding valve core cover 130, while the inclined flat surface is spaced apart from an inner wall surface of the guide rod groove 131, thereby forming the first flow-through groove 133. A plurality of inclined flat surfaces may form a plurality of first flow-through grooves 133. The first guide sleeve 132 disposed in this way has a simple structure and is convenient to mount. Structures of the second guide sleeve 54 and the first guide sleeve 132 may be the same.

Optionally, as shown in FIG. 1 and FIG. 25 to FIG. 27, the control valve 60 further includes a first elastic member 144 and a second elastic member 145. A first recess 134 is configured on an inner wall surface that is of the valve core cover 130 and that faces the valve core 140, and a second recess 141 is configured at an end that is of the valve core 140 and that faces the valve core cover 130. Two ends of the first elastic member 144 respectively fit with the first recess 134 and the second recess 141. A third recess 142 is configured at an end that is of the valve core 140 and that faces the valve body 50. One end of the second elastic member 145 fits with the third recess 142, and the other end abuts against the second guide sleeve 54. The first elastic member 144 and the second elastic member 145 jointly apply an elastic force to the valve core 140 to maintain positional stability of the valve core 140.

The first recess 134 and the second recess 141 are disposed, so that the first elastic member 144 can be effectively limited, and corresponding abutting positions can be provided to two ends of the first elastic member 144. The third recess 142 is disposed, so that the second elastic member 145 can be effectively limited, and a corresponding abutting position can be provided to one end of the second elastic member 145. In addition, the third recesses are disposed, so that a length of the control valve 60 in the up-down direction can be effectively shortened. This can facilitate miniaturization of the control valve 60, and avoid an excessively large volume of the control valve 60. The first elastic member 144 and the second elastic member 145 are disposed on upper and lower sides of the valve core 140, so that the valve core 140 can be suspended between the valve core cover 130 and the valve body 50, thereby ensuring control accuracy of the control valve 60.

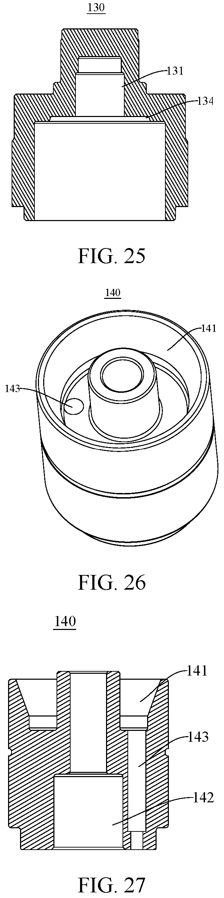

Optionally, as shown in FIG. 26 and FIG. 27, the valve core 140 is provided with at least one through hole 143, and two ends of the through hole 143 respectively penetrate two ends of the valve core 140. The through hole 143 may function to communicate upper space of the valve core 140 with lower space of the valve core 140, and may allow fluid to flow between the upper space of the valve core 140 and the lower space of the valve core 140. This can reduce resistance during movement of the valve core 140, thereby improving operational accuracy of the control valve 60.

As shown in FIG. 1, FIG. 13, and FIG. 14, a limiting structure 55 is configured on a side that is of the valve body 50 and that faces the valve core 140. Two limit positions of the valve core 140 in a movement direction of the valve core 140 are respectively defined by the limiting structure 55 and the valve core cover 130. That is, the limiting structure 55 and the valve core cover 130 may limit the valve core 140 in the up-down direction, so that the limit position of movement of the valve core 140 can be effectively controlled, and a limit position of movement of the pilot valve plug 90 can be further controlled, to adjust the fluid flow rate of the second flow path 80 and improve a control capability of the control valve 60.

Optionally, as shown in FIG. 1 and FIG. 16, the pilot valve plug 90 is configured with a mounting ring 94. The mounting ring 94 is sleeved on the guide rod 150, and the mounting ring 94 is in clearance fit with the guide rod 150. That is, the pilot valve plug 90 is provided with the mounting ring 94 on an upper side of the valve plate 91, and the mounting ring 94 functions to mount the guide rod 150. In the clearance fit manner, mounting of the pilot valve plug 90 and the guide rod 150 can be facilitated, thereby improving assembly efficiency of the control valve 60.

According to a specific embodiment of this application, as shown in FIG. 2 to FIG. 7, an assembly ring 13 is configured on a side that is of the overflow valve seat 10 and that faces away from the overflow valve body 30. A first sealing groove 14 extending in a circumferential direction of the assembly ring 13 is disposed on an outer peripheral surface of the assembly ring 13, the first sealing groove 14 is provided with a first sealing ring 15, and the first sealing ring 15 seals a gap between the assembly ring 13 and an inner cylinder 171 of the damper. The assembly ring 13 may be configured to mount the inner cylinder 171, the first sealing ring 15 may perform a sealing function between the inner cylinder 171 and the assembly ring 13, and the first sealing groove 14 may function to assemble the first sealing ring 15. The overflow valve seat 10 disposed in this way may effectively fit with the inner cylinder 171, thereby ensuring sealing performance between the overflow valve seat 10 and the inner cylinder 171.

As shown in FIG. 2 to FIG. 5, a second sealing groove 56 is disposed on an outer peripheral surface of the valve body 50, the second sealing groove 56 is provided with a second sealing ring 57, and the second sealing ring 57 seals a gap between the valve body 50 and an outer cylinder 172 of the damper. The second sealing ring 57 is disposed to perform a function of sealing the valve body 50 and the outer cylinder 172, and the second sealing groove 56 may function to assemble the second sealing ring 57. The valve body 50 disposed in this way may effectively fit with the outer cylinder 172, thereby ensuring sealing performance between the valve body 50 and the outer cylinder 172.

A control valve assembly according to some embodiments of this application includes the electromagnetic assembly 120, the valve body 50, the coil 122, the valve core cover 130, the valve core 140, the guide rod 150, and the pilot valve plug 90 in the foregoing embodiments. The insulating bracket 121 and the magnetically conductive cover 123 are mounted in the valve body 50. The coil 122 is wound in the coil groove 1211 of the insulating bracket 121 and covered by the magnetically conductive cover 123. The valve core cover 130 is mounted on the insulating bracket 121. The valve core 140 is movably mounted in the valve core cover 130. The guide rod 150 is connected to the valve core 140, and the pilot valve plug 90 is connected to the guide rod 150. When the coil 122 is energized, the valve core 140 generates magnetism and attracts the valve body 50.

A damper 2000 according to an embodiment of a second aspect of this application includes at least one adjustment module 1000 for a damper 2000 and a cylinder body 170. A compression chamber and a rebound chamber are defined in the cylinder body 170. The adjustment module 1000 is connected to the cylinder body 170, and the adjustment module 1000 separately communicates with the compression chamber and the rebound chamber, to control fluid flow between the compression chamber and the rebound chamber. According to the damper 2000 with the adjustment module 1000, an overflow valve body 30 can move stably, quick reset of the overflow valve body 30 can be achieved, and electromagnetic force fluctuation of the damper is small, thereby improving a damping effect and stability of the damper 2000.

According to some embodiments of this application, as shown in FIG. 2 to FIG. 5, the cylinder body 170 includes an outer cylinder 172 and an inner cylinder 171 disposed in the outer cylinder 172. The adjustment module 1000 is externally disposed outside the outer cylinder 172. The adjustment module 1000 is externally disposed to avoid occupation of internal space of the outer cylinder 172 by the adjustment module 1000. This can facilitate a miniaturization design of the cylinder body 170, and can meet volume requirements of the compression chamber and the rebound chamber.

Optionally, there are at least two adjustment modules 1000. One of the adjustment modules 1000 adjusts a flow rate of fluid flowing from the compression chamber to the rebound chamber, and another of the adjustment modules 1000 adjusts a flow rate of fluid flowing from the rebound chamber to the compression chamber. For example, there may be two adjustment modules 1000, and the two adjustment modules 1000 respectively adjust flow rates in two directions. One of the two adjustment modules 1000 communicates with the compression chamber through a first communication hole 11, and communicates with the rebound chamber through a second communication hole 12, and the other of the two adjustment modules 1000 communicates with the rebound chamber through a first communication hole 11, and communicates with the compression chamber through a second communication hole 12. The two adjustment modules 1000 disposed in this way can implement bidirectional adjustment, and can better implement adjustment on fluid in the damper 2000.

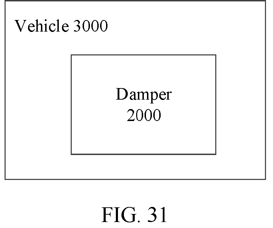

A vehicle 3000 according to an embodiment of a third aspect of this application includes the damper 2000 in any one of the foregoing embodiments, as shown in FIG. 31.

In a non-limiting example, this application provides the following several embodiments.

According to an embodiment of an aspect of this application, an adjustment module 1000 for a damper 2000 is provided. The adjustment module 1000 separately communicates with a compression chamber and a rebound chamber of the damper 2000. The adjustment module 1000 includes: an overflow valve seat 10; an overflow valve fixing sleeve 20, where the overflow valve fixing sleeve 20 is located on one side of the overflow valve seat 10; an overflow valve body 30, where the overflow valve body 30 is movably disposed in the overflow valve fixing sleeve 20, and the overflow valve body 30 adjusts a fluid flow rate between the compression chamber and the rebound chamber by getting close to and away from the overflow valve seat 10; and an overflow elastic member 40, where the overflow elastic member 40 is disposed between the overflow valve fixing sleeve 20 and the overflow valve body 30, and the overflow elastic member 40 provides an elastic force for pushing the overflow valve body 30 toward the overflow valve seat 10.

Therefore, by disposing the overflow elastic member between the overflow valve fixing sleeve and the overflow valve body, a problem of slow reset of the overflow valve body existing when the overflow valve body moves in a direction close to the overflow valve seat and problems of unstable movement of the overflow valve body and unstable fluid flow existing when the overflow valve body moves in a direction away from the overflow valve seat in the conventional technology are resolved, so that the overflow valve body can move stably, and quick reset of the overflow valve body can be achieved.

In some embodiments, the overflow elastic member 40 is a spring. The overflow elastic member 40 is disposed in the overflow valve fixing sleeve 20. One end of the overflow elastic member 40 abuts against the overflow valve fixing sleeve 20, and the other end abuts against the overflow valve body 30.

In some embodiments, an outer diameter of the end that is of the overflow elastic member 40 and that abuts against the overflow valve fixing sleeve 20 is greater than an outer diameter of the end that is of the overflow elastic member 40 and that abuts against the overflow valve body 30.

In some embodiments, the adjustment module 1000 further includes: a valve body 50, where the overflow valve fixing sleeve 20 is mounted in the valve body 50, and at least a part of the overflow valve seat 10 is mounted in the valve body 50; and a control valve 60, where the control valve 60 controls movement of the overflow valve body 30 to get close to and away from the overflow valve seat 10.

In some embodiments, the overflow valve seat 10 is provided with at least one first communication hole 11 and at least one second communication hole 12. One of the compression chamber and the rebound chamber communicates with the first communication hole 11, and the other of the compression chamber and the rebound chamber communicates with the second communication hole 12. The adjustment module 1000 is configured with a first flow path 70 and a second flow path 80, and a flow rate of the first flow path 70 is different from a flow rate of the second flow path 80. The adjustment module 1000 controls the first communication hole 11 and the second communication hole 12 to selectively pass through at least one of the first flow path 70 and the second flow path 80.

In some embodiments, the first communication hole 11 is disposed at a center of the overflow valve seat 10. There are a plurality of second communication holes 12, and the plurality of second communication holes 12 are spaced apart in a circumferential direction of the overflow valve seat 10 and surround the first communication hole 11.

In some embodiments, a gap between the overflow valve body 30 and the overflow valve seat 10 forms the first flow path 70. The overflow valve body 30 adjusts the flow rate of the first flow path 70 by getting close to and away from the overflow valve seat 10.

In some embodiments, the second flow path 80 passes through the overflow valve body 30 and the overflow valve fixing sleeve 20. The control valve 60 adjusts the flow rate of the second flow path 80.

In some embodiments, the second flow path 80 includes: an overflow chamber 81, where the overflow valve body 30 and the overflow valve fixing sleeve 20 jointly define the overflow chamber 81, and the overflow elastic member 40 is disposed in the overflow chamber 81; a pilot chamber 82, where the overflow valve fixing sleeve 20 and the valve body 50 jointly define the pilot chamber 82; a first overflow passage 83 and a second overflow passage 84, where the first overflow passage 83 is disposed in the overflow valve body 30 and separately communicates with the first communication hole 11 and the overflow chamber 81, and the second overflow passage 84 is disposed in the overflow valve body 30 and separately communicates with the overflow chamber 81 and the pilot chamber 82; and a third overflow passage 85, where the third overflow passage 85 is disposed in the overflow valve fixing sleeve 20 and separately communicates with the pilot chamber 82 and the second communication hole 12. The control valve 60 adjusts a flow rate of the second overflow passage 84.

In some embodiments, a minimum cross-sectional area of the second overflow passage 84 is greater than a minimum cross-sectional area of the first overflow passage 83.

In some embodiments, a guide post 31 is configured on a side that is of the overflow valve body 30 and that faces the overflow valve fixing sleeve 20. The overflow elastic member 40 is disposed around the guide post 31, the overflow valve fixing sleeve 20 is provided with a guide hole 21, and the guide post 31 movably fits with the guide hole 21. The second overflow passage 84 is disposed in the guide post 31. The control valve 60 includes a pilot valve plug 90. The pilot valve plug 90 extends into the pilot chamber 82, and the control valve 60 adjusts the flow rate of the second overflow passage 84 by controlling the pilot valve plug 90 to get close to and away from the guide post 31.

In some embodiments, the second overflow passage 84 includes: at least one radial segment 841, where the radial segment 841 extends in a direction perpendicular to an axial direction of the guide post 31, and one end of the radial segment 841 communicates with the overflow chamber 81; and an axial segment 842, where the axial segment 842 extends in the axial direction of the guide post 31, one end of the axial segment 842 communicates with the other end of the radial segment 841, and the other end of the axial segment 842 communicates with the pilot chamber 82.

In some embodiments, there are a plurality of radial segments 841 that are spaced apart in a circumferential direction of the guide post 31.

In some embodiments, the pilot valve plug 90 includes: a valve plate 91; a valve head 92, where the valve head 92 is disposed on a side that is of the valve plate 91 and that faces the guide post 31, and the valve head 92 adjusts the flow rate of the second overflow passage 84 by extending into and getting away from the second overflow passage 84; and a flow-guiding ring 93, where the flow-guiding ring 93 is disposed on a side that is of the valve plate 91 and that faces the overflow valve fixing sleeve 20 and disposed around the valve head 92.

In some embodiments, a cross-sectional area of an end that is of the valve head 92 and that is adjacent to the guide post 31 is less than a cross-sectional area of an end that is of the valve head 92 and that is away from the guide post 31.

In some embodiments, there is at least one third overflow passage 85 that is a groove disposed on an outer side surface that is of the overflow valve fixing sleeve 20 and that fits with the valve body 50, and two ends of the third overflow passage 85 respectively penetrate two axial ends of the overflow valve fixing sleeve 20.

In some embodiments, a surface that is of the overflow valve fixing sleeve 20 and that faces the pilot chamber 82 is provided with: an annular flow-guiding platform 22, where the annular flow-guiding platform 22 is disposed around the second overflow passage 84, and an outer diameter of an end that is of the annular flow-guiding platform 22 and that extends into the pilot chamber 82 is less than an outer diameter of the other end; an annular flow-guiding groove 23, where the annular flow-guiding groove 23 is disposed around the annular flow-guiding platform 22; and at least one flow-guiding branch groove 24, where one end of the flow-guiding branch groove 24 communicates with the annular flow-guiding groove 23, and the other end communicates with the third overflow passage 85.

In some embodiments, there are a plurality of third overflow passages 85 that are spaced apart in a circumferential direction of the overflow valve fixing sleeve 20. There are a plurality of flow-guiding branch grooves 24 that are spaced apart in the circumferential direction of the overflow valve fixing sleeve 20. One end of each flow-guiding branch groove 24 communicates with the annular flow-guiding groove 23, and the other end communicates with a corresponding third overflow passage 85.

In some embodiments, an overflow sealing member 100 is disposed between the overflow valve fixing sleeve 20 and the overflow valve body 30. A deformation groove 101 is configured on a side that is of the overflow sealing member 100 and that faces the overflow chamber 81, and the deformation groove 101 communicates with the overflow chamber 81. The overflow sealing member 100 is configured so that after fluid in the overflow chamber 81 flows into the deformation groove 101, pressure applied to the overflow sealing member 100 causes the overflow sealing member 100 to expand in a direction of at least one of the overflow valve fixing sleeve 20 and the overflow valve body 30.

In some embodiments, the overflow sealing member 100 is configured to be annular and located between an outer peripheral surface of the overflow valve body 30 and an inner peripheral surface of the overflow valve fixing sleeve 20. The deformation groove 101 extends in a circumferential direction of the overflow sealing member 100.

In some embodiments, a distance between an outer peripheral surface and an inner peripheral surface of a side that is of the overflow sealing member 100 and that is adjacent to the overflow chamber 81 is greater than a distance between an outer peripheral surface and an inner peripheral surface of a side that is of the overflow sealing member 100 and that is away from the overflow chamber 81.

In some embodiments, an overflow sealing groove 32 is disposed on at least one of the inner peripheral surface of the overflow valve fixing sleeve 20 and the outer peripheral surface of the overflow valve body 30. The overflow sealing member 100 is disposed in the overflow sealing groove 32.

In some embodiments, an overflow valve distance adjustment ring 110 is further included. The overflow valve distance adjustment ring 110 is disposed in the valve body 50 and supported between the overflow valve seat 10 and the overflow valve fixing sleeve 20.

In some embodiments, the overflow valve seat 10 is in threaded fit with the valve body 50, and the overflow valve seat 10 adjusts a deformation amount of the overflow valve distance adjustment ring 110 by adjusting a degree of tightening with the valve body 50, to adjust a distance from each of the overflow valve fixing sleeve 20 and the overflow valve body 30 to the overflow valve seat 10.

In some embodiments, a height of the overflow valve distance adjustment ring 110 in an axial direction of the overflow valve distance adjustment ring 110 is 2.5 mm to 5 mm.

In some embodiments, a section that is of the overflow valve distance adjustment ring 110 and that is parallel to the axial direction of the overflow valve distance adjustment ring 110 is configured to be arc-shaped or linear, and a distance between an end that is of the overflow valve distance adjustment ring 110 and that is adjacent to the overflow valve seat 10 and a central axis of the overflow valve distance adjustment ring 110 is greater than a distance between an end that is of the overflow valve distance adjustment ring 110 and that is adjacent to the overflow valve fixing sleeve 20 and the central axis of the overflow valve distance adjustment ring 110.

In some embodiments, a first abutting inclined surface 111 is configured at an end that is of the overflow valve distance adjustment ring 110 and that faces the overflow valve fixing sleeve 20, and a distance between the first abutting inclined surface 111 and the central axis of the overflow valve distance adjustment ring 110 gradually increases in a direction from the overflow valve seat 10 to the overflow valve fixing sleeve 20. A second abutting inclined surface 25 is configured at an end that is of the overflow valve fixing sleeve 20 and that faces the overflow valve distance adjustment ring 110, and a distance between the second abutting inclined surface 25 and a central axis of the overflow valve fixing sleeve 20 gradually increases in the direction from the overflow valve seat 10 to the overflow valve fixing sleeve 20. The first abutting inclined surface 111 fits with the second abutting inclined surface 25.

In some embodiments, an annular stop platform 58 is configured on an inner wall surface of the valve body 50. The annular stop platform 58 abuts against a side that is of the overflow valve fixing sleeve 20 and that faces away from the overflow valve seat 10.

In some embodiments, the overflow valve fixing sleeve 20 is in interference fit with the valve body 50.

In some embodiments, the control valve 60 includes: an electromagnetic assembly 120, where the electromagnetic assembly 120 is mounted in the valve body 50; a valve core cover 130, where the valve core cover 130 is mounted in the electromagnetic assembly 120; a valve core 140, where the valve core 140 is movably mounted in the valve core cover 130; a guide rod 150, where the guide rod 150 is connected to the valve core 140; and a pilot valve plug 90, where the pilot valve plug 90 is connected to the guide rod 150. When the electromagnetic assembly 120 is energized, the valve core 140 generates magnetism and attracts the valve body 50. When the valve core 140 moves, movement of the overflow valve body 30 is controlled through the guide rod 150 and the pilot valve plug 90.

In some embodiments, the electromagnetic assembly 120 includes: an insulating bracket 121, where the insulating bracket 121 is sleeved on the valve core cover 130, and a coil groove 1211 is disposed on an outer sidewall; a coil 122, where the coil 122 is wound in the coil groove 1211; and a magnetically conductive cover 123, where the magnetically conductive cover 123 is mounted in the valve body 50 and covers the coil 122.

In some embodiments, the insulating bracket 121 is configured with a wire post 1212, and the magnetically conductive cover 123 is provided with an avoidance hole 1233. The wire post 1212 extends out of the magnetically conductive cover 123 from the avoidance hole 1233, and the wire post 1212 is provided with a wire hole for the coil 122 to extend out.

In some embodiments, at least one anti-rotation positioning post 1213 is configured on a side that is of the insulating bracket 121 and that faces away from the valve body 50, the magnetically conductive cover 123 is provided with at least one anti-rotation positioning hole 1231, and the anti-rotation positioning post 1213 passes through the anti-rotation positioning hole 1231. A part that is of the anti-rotation positioning post 1213 and that extends out of the anti-rotation positioning hole 1231 is configured with an axial positioning portion 1214 through deformation, and the magnetically conductive cover 123 is stopped by the axial positioning portion 1214.

In some embodiments, there are a plurality of anti-rotation positioning posts 1213 that are spaced apart in a circumferential direction of the insulating bracket 121, and there are a plurality of anti-rotation positioning holes 1231 that are spaced apart in a circumferential direction of the magnetically conductive cover 123. The plurality of anti-rotation positioning posts 1213 pass through the plurality of anti-rotation positioning holes 1231 in a one-to-one correspondence.

In some embodiments, a support boss 51 is configured on a side that is of the valve body 50 and that faces the control valve 60. The insulating bracket 121 is disposed on the support boss 51, and the magnetically conductive cover 123 is sleeved on the support boss 51.

In some embodiments, the control valve 60 further includes a magnetic isolation ring 160. The magnetic isolation ring 160 is disposed around the valve core 140 and located between the valve core cover 130 and the valve body 50.

In some embodiments, one of the magnetic isolation ring 160 and the valve core cover 130 is provided with an inner assembly ring 1232, and the other is provided with an outer assembly ring 161. The outer assembly ring 161 is sleeved on the inner assembly ring 1232 and is in interference fit with the inner assembly ring 1232.

In some embodiments, an annular support groove 52 is disposed on a side that is of the valve body 50 and that faces the magnetic isolation ring 160, and an annular support platform 162 is configured on a side that is of the magnetic isolation ring 160 and that faces the valve body 50. The annular support platform 162 fits with the annular support groove 52 and is in interference fit with the annular support groove 52.

In some embodiments, a guide rod groove 131 is configured on an inner wall surface of the valve core cover 130, and a first guide sleeve 132 is disposed in the guide rod groove 131. The valve body 50 is configured with a guide rod hole 53, and a second guide sleeve 54 is disposed in the guide rod hole 53. The guide rod 150 movably fits with the first guide sleeve 132 and the second guide sleeve 54.

In some embodiments, at least one first flow-through groove 133 is disposed on an outer side surface that is of the first guide sleeve 132 and that fits with the valve core cover 130, and two ends of the first flow-through groove 133 respectively penetrate two axial ends of the first guide sleeve 132. At least one second flow-through groove is disposed on an outer side surface that is of the second guide sleeve 54 and that fits with the valve body 50, and two ends of the second flow-through groove respectively penetrate two axial ends of the second guide sleeve 54.

In some embodiments, there are a plurality of first flow-through grooves 133 that are spaced apart in a circumferential direction of the first guide sleeve 132. There are a plurality of second flow-through grooves that are spaced apart in a circumferential direction of the second guide sleeve 54.

In some embodiments, the control valve 60 further includes: a first elastic member 144, where a first recess 134 is configured on an inner wall surface that is of the valve core cover 130 and that faces the valve core 140, a second recess 141 is configured at an end that is of the valve core 140 and that faces the valve core cover 130, and two ends of the first elastic member 144 respectively fit with the first recess 134 and the second recess 141; and a second elastic member 145, where a third recess 142 is configured at an end that is of the valve core 140 and that faces the valve body 50, one end of the second elastic member 145 fits with the third recess 142, and the other end abuts against the second guide sleeve 54. The first elastic member 144 and the second elastic member 145 jointly apply an elastic force to the valve core 140 to maintain positional stability of the valve core 140.

In some embodiments, the valve core 140 is provided with at least one through hole 143, and two ends of the through hole 143 respectively penetrate two ends of the valve core 140.

In some embodiments, a limiting structure 55 is configured on a side that is of the valve body 50 and that faces the valve core 140. Two limit positions of the valve core 140 in a movement direction of the valve core 140 are respectively defined by the limiting structure 55 and the valve core cover 130.

In some embodiments, the pilot valve plug 90 is configured with a mounting ring 94. The mounting ring 94 is sleeved on the guide rod 150 and is in clearance fit with the guide rod 150.

In some embodiments, an assembly ring 13 is configured on a side that is of the overflow valve seat 10 and that faces away from the overflow valve body 30. A first sealing groove 14 extending in a circumferential direction of the assembly ring 13 is disposed on an outer peripheral surface of the assembly ring 13, the first sealing groove 14 is provided with a first sealing ring 15, and the first sealing ring 15 seals a gap between the assembly ring 13 and an inner cylinder 171 of the damper 2000.

In some embodiments, a second sealing groove 56 is disposed on an outer peripheral surface of the valve body 50, the second sealing groove 56 is provided with a second sealing ring 57, and the second sealing ring 57 seals a gap between the valve body 50 and an outer cylinder 172 of the damper 2000.

According to an embodiment of another aspect of this application, an overflow sealing member 100 for an adjustment module 1000 is provided. The overflow sealing member 100 separately abuts and seals against an overflow valve fixing sleeve 20 and an overflow valve body 30 of the adjustment module 1000. A deformation groove 101 is configured on a side that is of the overflow sealing member 100 and that faces an overflow chamber 81 of the adjustment module 1000, and the deformation groove 101 communicates with the overflow chamber 81. The overflow sealing member 100 is configured so that after fluid in the overflow chamber 81 flows into the deformation groove 101, pressure applied to the overflow sealing member 100 causes the overflow sealing member 100 to expand in a direction of at least one of the overflow valve fixing sleeve 20 and the overflow valve body 30.

Therefore, the deformation groove is deformed under fluid pressure, to resolve a problem, in the conventional technology, that after a sealing ring operates for a long time, the sealing member is worn and deformed to some extent and there is a gap between the sealing member and the overflow valve body or the overflow valve fixing sleeve, resulting in poorer sealing performance and leakage, so that at least one side of the deformation groove is closely attached to the corresponding overflow valve fixing sleeve and overflow valve body. Therefore, a better sealing effect can be achieved, higher pressure can be withstood, quick pressure buildup can be better implemented, and a leakage amount is very small.

In some embodiments, the overflow sealing member 100 is configured to be annular and located between an outer peripheral surface of the overflow valve body 30 and an inner peripheral surface of the overflow valve fixing sleeve 20. The deformation groove 101 extends in a circumferential direction of the overflow sealing member 100, and a width of a side that is of the deformation groove 101 and that is adjacent to the overflow chamber 81 is greater than a width of a side that is of the deformation groove 101 and that is away from the overflow chamber 81.

In some embodiments, a distance between an outer peripheral surface and an inner peripheral surface of a side that is of the overflow sealing member 100 and that is adjacent to the overflow chamber 81 is greater than a distance between an outer peripheral surface and an inner peripheral surface of a side that is of the overflow sealing member 100 and that is away from the overflow chamber 81.

In some embodiments, the overflow sealing member 100 includes: an outer sealing ring 103, where the outer sealing ring 103 abuts against the overflow valve fixing sleeve 20; and an inner sealing ring 102, where the inner sealing ring 102 abuts against the overflow valve body 30. The deformation groove 101 is formed between the outer sealing ring 103 and the inner sealing ring 102.

In some embodiments, a cross-section of the inner sealing ring 102 is disposed parallel to a central axis of the overflow sealing member 100. A cross-section of the outer sealing ring 103 is disposed inclined relative to the central axis of the overflow sealing member 100, and a distance between the outer sealing ring 103 and the central axis of the overflow sealing member 100 gradually increases in a direction toward the overflow chamber 81.

In some embodiments, a section that is of the inner sealing ring 102 and that is parallel to the central axis of the overflow sealing member 100 is linear or arc-shaped. A section that is of the outer sealing ring 103 and that is parallel to the central axis of the overflow sealing member 100 is linear or arc-shaped.

In some embodiments, a bottom sealing ring 104 is further included. An outer peripheral edge of the bottom sealing ring 104 is connected to a side that is of the outer sealing ring 103 and that faces away from the overflow chamber 81, and an inner peripheral edge of the bottom sealing ring 104 is connected to a side that is of the inner sealing ring 102 and that faces away from the overflow chamber 81.

In some embodiments, a side surface that is of the bottom sealing ring 104 and that faces away from the outer sealing ring 103 and the inner sealing ring 102 is configured as a plane perpendicular to the central axis of the overflow sealing member 100.

In some embodiments, a side surface that is of the bottom sealing ring 104 and that forms a groove bottom of the deformation groove 101 is configured as a plane perpendicular to the central axis of the overflow sealing member 100.

In some embodiments, the adjustment module 1000 separately communicates with a compression chamber and a rebound chamber of the damper 2000. The adjustment module 1000 includes: an overflow valve seat 10; an overflow valve fixing sleeve 20, where the overflow valve fixing sleeve is located on one side of the overflow valve seat 10; an overflow valve body 30, where the overflow valve body 30 is movably disposed in the overflow valve fixing sleeve 20 and jointly defines an overflow chamber 81 with the overflow valve fixing sleeve 20, and the overflow valve body 30 adjusts a fluid flow rate between the compression chamber and the rebound chamber by getting close to and away from the overflow valve seat 10; and the foregoing overflow sealing member 100 for an adjustment module 1000.

In some embodiments, an overflow sealing groove 32 is disposed on at least one of the inner peripheral surface of the overflow valve fixing sleeve 20 and the outer peripheral surface of the overflow valve body 30. The overflow sealing member 100 is disposed in the overflow sealing groove 32.

In some embodiments, the overflow sealing groove 32 has a first groove wall 321 and a second groove wall 322. The first groove wall 321 is located on a side that is of the overflow sealing groove 32 and that faces the overflow chamber 81, and the second groove wall 322 is located on a side that is of the overflow sealing groove 32 and that faces away from the overflow chamber 81. In a direction perpendicular to an axial direction of the overflow valve body 30, the second groove wall 322 is higher than the first groove wall 321.

In some embodiments, the adjustment module 1000 further includes: a valve body 50, where the overflow valve fixing sleeve 20 is mounted in the valve body 50, and at least a part of the overflow valve seat 10 is mounted in the valve body 50; and a control valve 60, where the control valve 60 controls movement of the overflow valve body 30 to get close to and away from the overflow valve seat 10.

In some embodiments, the overflow valve seat 10 is provided with at least one first communication hole 11 and at least one second communication hole 12. One of the compression chamber and the rebound chamber communicates with the first communication hole 11, and the other of the compression chamber and the rebound chamber communicates with the second communication hole 12. The adjustment module 1000 is configured with a first flow path 70 and a second flow path 80, and a flow rate of the first flow path 70 is different from a flow rate of the second flow path 80. The second flow path 80 includes the overflow chamber 81. The adjustment module 1000 controls the first communication hole 11 and the second communication hole 12 to selectively pass through at least one of the first flow path 70 and the second flow path 80.

In some embodiments, a gap between the overflow valve body 30 and the overflow valve seat 10 forms the first flow path 70. The overflow valve body 30 adjusts the flow rate of the first flow path 70 by getting close to and away from the overflow valve seat 10.

In some embodiments, the second flow path 80 further includes: a pilot chamber 82, where the overflow valve fixing sleeve 20 and the valve body 50 jointly define the pilot chamber 82; a first overflow passage 83 and a second overflow passage 84, where the first overflow passage 83 is disposed in the overflow valve body 30 and separately communicates with the first communication hole 11 and the overflow chamber 81, and the second overflow passage 84 is disposed in the overflow valve body 30 and separately communicates with the overflow chamber 81 and the pilot chamber 82; and a third overflow passage 85, where the third overflow passage 85 is disposed in the overflow valve fixing sleeve 20 and separately communicates with the pilot chamber 82 and the second communication hole 12. The control valve 60 adjusts a flow rate of the second overflow passage 84.

In some embodiments, a guide post 31 is configured on a side that is of the overflow valve body 30 and that faces the overflow valve fixing sleeve 20. The overflow valve fixing sleeve 20 is provided with a guide hole 21, and the guide post 31 movably fits with the guide hole 21. The second overflow passage 84 is disposed in the guide post 31. The control valve 60 includes a pilot valve plug 90. The pilot valve plug 90 extends into the pilot chamber 82, and the control valve 60 adjusts the flow rate of the second overflow passage 84 by controlling the pilot valve plug 90 to get close to and away from the guide post 31.

In some embodiments, the second overflow passage 84 includes: at least one radial segment 841, where the radial segment 841 extends in a direction perpendicular to an axial direction of the guide post 31, and one end of the radial segment 841 communicates with the overflow chamber 81; and an axial segment 842, where the axial segment 842 extends in the axial direction of the guide post 31, one end of the axial segment 842 communicates with the other end of the radial segment 841, and the other end of the axial segment 842 communicates with the pilot chamber 82.

In some embodiments, the pilot valve plug 90 includes: a valve plate 91; a valve head 92, where the valve head 92 is disposed on a side that is of the valve plate 91 and that faces the guide post 31, and the valve head 92 adjusts the flow rate of the second overflow passage 84 by extending into and getting away from the second overflow passage 84; and a flow-guiding ring 93, where the flow-guiding ring 93 is disposed on a side that is of the valve plate 91 and that faces the overflow valve fixing sleeve 20 and disposed around the valve head 92.

In some embodiments, there is at least one third overflow passage 85 that is a groove disposed on an outer side surface that is of the overflow valve fixing sleeve 20 and that fits with the valve body 50, and two ends of the third overflow passage 85 respectively penetrate two axial ends of the overflow valve fixing sleeve 20.

In some embodiments, a surface that is of the overflow valve fixing sleeve 20 and that faces the pilot chamber 82 is provided with: an annular flow-guiding platform 22, where the annular flow-guiding platform 22 is disposed around the second overflow passage 84, and an outer diameter of an end that is of the annular flow-guiding platform 22 and that extends into the pilot chamber 82 is less than an outer diameter of the other end; an annular flow-guiding groove 23, where the annular flow-guiding groove 23 is disposed around the annular flow-guiding platform 22; and at least one flow-guiding branch groove 24, where one end of the flow-guiding branch groove 24 communicates with the annular flow-guiding groove 23, and the other end communicates with the third overflow passage 85.

In some embodiments, there are a plurality of third overflow passages 85 that are spaced apart in a circumferential direction of the overflow valve fixing sleeve 20. There are a plurality of flow-guiding branch grooves 24 that are spaced apart in the circumferential direction of the overflow valve fixing sleeve 20. One end of each flow-guiding branch groove 24 communicates with the annular flow-guiding groove 23, and the other end communicates with a corresponding third overflow passage 85.

In some embodiments, the control valve 60 includes: an electromagnetic assembly 120, where the electromagnetic assembly 120 is mounted in the valve body 50; a valve core cover 130, where the valve core cover 130 is mounted in the electromagnetic assembly 120; a valve core 140, where the valve core 140 is movably mounted in the valve core cover 130; a guide rod 150, where the guide rod 150 is connected to the valve core 140; and a pilot valve plug 90, where the pilot valve plug 90 is connected to the guide rod 150. When the electromagnetic assembly 120 is energized, the valve core 140 generates magnetism and attracts the valve body 50. When the valve core 140 moves, movement of the overflow valve body 30 is controlled through the guide rod 150 and the pilot valve plug 90.

In some embodiments, an assembly ring 13 is configured on a side that is of the overflow valve seat 10 and that faces away from the overflow valve body 30. A first sealing groove 14 extending in a circumferential direction of the assembly ring 13 is disposed on an outer peripheral surface of the assembly ring 13, the first sealing groove 14 is provided with a first sealing ring 15, and the first sealing ring 15 seals a gap between the assembly ring 13 and an inner cylinder 171 of the damper 2000.

In some embodiments, a second sealing groove 56 is disposed on an outer peripheral surface of the valve body 50, the second sealing groove 56 is provided with a second sealing ring 57, and the second sealing ring 57 seals a gap between the valve body 50 and an outer cylinder 172 of the damper 2000.

According to an embodiment of still another aspect of this application, an overflow valve body 30 for an adjustment module 1000 is provided. The overflow valve body 30 is provided with: a first overflow passage 83, where the first overflow passage 83 communicates with an overflow chamber 81 of the adjustment module 1000 and is provided for fluid to flow into the overflow chamber 81; and a second overflow passage 84, where the second overflow passage 84 communicates with the overflow chamber 81 and is provided for fluid to flow out of the overflow chamber 81. A minimum cross-sectional area of the second overflow passage 84 is greater than a minimum cross-sectional area of the first overflow passage 83.

Therefore, according to the overflow valve body for an adjustment module, a problem, in the conventional technology, that a flow rate of fluid entering the overflow chamber and a flow rate of fluid flowing out of the overflow chamber are uneven and consequently the fluid entering/flowing out of the overflow valve flows unstably is resolved. In this way, the fluid entering the overflow chamber can smoothly flow out of the overflow chamber through the second overflow passage, so that when the fluid passes through the overflow chamber, higher stability can be achieved, a fluid flow rate curve is smooth, and curve fluctuation is small, thereby further improving fluid flow smoothness in the adjustment module.

In some embodiments, the overflow valve body 30 includes: a valve shoulder 33, where the first overflow passage 83 is disposed in the valve shoulder 33, and the overflow chamber 81 is located on one side of the valve shoulder 33 in a thickness direction; and a guide post 31, where the guide post 31 is disposed on the one side of the valve shoulder 33 in the thickness direction, and the second overflow passage 84 is disposed in the guide post 31.

In some embodiments, a central axis of the guide post 31 coincides with a central axis of the valve shoulder 33.

In some embodiments, the second overflow passage 84 includes: at least one radial segment 841, where the radial segment 841 extends in a direction perpendicular to an axial direction of the guide post 31, and one end of the radial segment 841 communicates with the overflow chamber 81; and an axial segment 842, where the axial segment 842 extends in the axial direction of the guide post 31, one end of the axial segment 842 communicates with the other end of the radial segment 841, and the other end of the axial segment 842 penetrates an end that is of the guide post 31 and that faces away from the valve shoulder 33.

In some embodiments, a ratio of the minimum cross-sectional area of the first overflow passage 83 to a minimum cross-sectional area of the axial segment 842 is 1:10 to 1:4.

In some embodiments, a sum of minimum cross-sectional areas of all radial segments 841 is greater than or equal to the minimum cross-sectional area of the axial segment 842.

In some embodiments, there are a plurality of radial segments 841 that are spaced apart in a circumferential direction of the guide post 31.

In some embodiments, there are two radial segments 841 whose central axes coincide.

In some embodiments, the axial segment 842 includes: a bottom segment 8421, where one end of the bottom segment 8421 communicates with the other end of the radial segment 841; and a top segment 8422, where one end of the top segment 8422 communicates with the other end of the bottom segment 8421, and the other end of the top segment 8422 penetrates the end that is of the guide post 31 and that faces away from the valve shoulder 33. A cross-sectional area of the bottom segment 8421 is less than a cross-sectional area of the top segment 8422.

In some embodiments, the first overflow passage 83 includes: a middle segment 8313; a first diverging segment 8311, where the first diverging segment 8311 communicates with the middle segment 8313 and is located on a side that is of the middle segment 8313 and that faces away from the overflow chamber 81, and a cross-sectional area of an end that is of the first diverging segment 8311 and that is adjacent to the middle segment 8313 is less than a cross-sectional area of an end that is of the first diverging segment 8311 and that is away from the middle segment 8313; and a second diverging segment 8312, where the second diverging segment 8312 communicates with the middle segment 8313 and is located on a side that is of the middle segment 8313 and that faces the overflow chamber 81, and a cross-sectional area of the second diverging segment 8312 gradually increases in a direction away from the middle segment 8313.

In some embodiments, the overflow valve body 30 further includes a valve ring 34. The valve ring 34 is disposed on the other side of the valve shoulder 33 in the thickness direction and extends in an annular shape along an outer peripheral edge of the valve shoulder 33.

In some embodiments, an overflow sealing groove 32 for assembling an overflow sealing member 100 is disposed on an outer peripheral surface of the valve ring 34.

In some embodiments, the overflow sealing groove 32 has a first groove wall 321 and a second groove wall 322. The first groove wall 321 is located on a side that is of the overflow sealing groove 32 and that faces the guide post 31, and the second groove wall 322 is located on a side that is of the overflow sealing groove 32 and that faces away from the guide post 31. In a direction perpendicular to an axial direction of the overflow valve body 30, the second groove wall 322 is higher than the first groove wall 321.

In some embodiments, an annular sealing platform 311 for fitting with a pilot valve plug 90 of the adjustment module 1000 is configured at an end that is of the guide post 31 and that is away from the valve shoulder 33. The annular sealing platform 311 is disposed around the second overflow passage 84, and a distance between an inner peripheral surface of an end that is of the annular sealing platform 311 and that is adjacent to the valve shoulder 33 and a central axis of the annular sealing platform 311 is less than a distance between an inner peripheral surface of an end that is of the annular sealing platform 311 and that is away from the valve shoulder 33 and the central axis of the annular sealing platform 311.

In some embodiments, a distance between an outer peripheral surface of the end that is of the annular sealing platform 311 and that is adjacent to the valve shoulder 33 and the central axis of the annular sealing platform 311 is greater than a distance between an outer peripheral surface of the end that is of the annular sealing platform 311 and that is away from the valve shoulder 33 and the central axis of the annular sealing platform 311.

In some embodiments, the adjustment module 1000 separately communicates with a compression chamber and a rebound chamber of the damper 2000. The adjustment module 1000 includes: an overflow valve seat 10; an overflow valve fixing sleeve 20, where the overflow valve fixing sleeve is located on one side of the overflow valve seat 10; and the foregoing overflow valve body 30 for an adjustment module 1000, where the overflow valve body 30 is movably disposed in the overflow valve fixing sleeve 20 and jointly defines the overflow chamber 81 with the overflow valve fixing sleeve 20, and the overflow valve body 30 adjusts a fluid flow rate between the compression chamber and the rebound chamber by getting close to and away from the overflow valve seat 10.

In some embodiments, the adjustment module 1000 further includes: a valve body 50, where the overflow valve fixing sleeve 20 is mounted in the valve body 50, and at least a part of the overflow valve seat 10 is mounted in the valve body 50; and a control valve 60, where the control valve 60 controls movement of the overflow valve body 30 to get close to and away from the overflow valve seat 10.

In some embodiments, the overflow valve seat 10 is provided with at least one first communication hole 11 and at least one second communication hole 12. One of the compression chamber and the rebound chamber communicates with the first communication hole 11, and the other of the compression chamber and the rebound chamber communicates with the second communication hole 12. The adjustment module 1000 is configured with a first flow path 70 and a second flow path 80, and a flow rate of the first flow path 70 is different from a flow rate of the second flow path 80. The second flow path 80 includes the first overflow passage 83, the overflow chamber 81, and the second overflow passage 84. The adjustment module 1000 controls the first communication hole 11 and the second communication hole 12 to selectively pass through at least one of the first flow path 70 and the second flow path 80.

In some embodiments, the first communication hole 11 is disposed at a center of the overflow valve seat 10. There are a plurality of second communication holes 12, and the plurality of second communication holes 12 are spaced apart in a circumferential direction of the overflow valve seat 10 and surround the first communication hole 11.

In some embodiments, a gap between the overflow valve body 30 and the overflow valve seat 10 forms the first flow path 70. The overflow valve body 30 adjusts the flow rate of the first flow path 70 by getting close to and away from the overflow valve seat 10.

In some embodiments, the second flow path 80 further includes: a pilot chamber 82, where the overflow valve fixing sleeve 20 and the valve body 50 jointly define the pilot chamber 82, the first overflow passage 83 separately communicates with the first communication hole 11 and the overflow chamber 81, and the second overflow passage 84 separately communicates with the overflow chamber 81 and the pilot chamber 82; and a third overflow passage 85, where the third overflow passage 85 is disposed in the overflow valve fixing sleeve 20 and separately communicates with the pilot chamber 82 and the second communication hole 12. The control valve 60 adjusts a flow rate of the second overflow passage 84.

In some embodiments, there is at least one third overflow passage 85 that is a groove disposed on an outer side surface that is of the overflow valve fixing sleeve 20 and that fits with the valve body 50, and two ends of the third overflow passage 85 respectively penetrate two axial ends of the overflow valve fixing sleeve 20.

In some embodiments, a surface that is of the overflow valve fixing sleeve 20 and that faces the pilot chamber 82 is provided with: an annular flow-guiding platform 22, where the annular flow-guiding platform 22 is disposed around the second overflow passage 84, and an outer diameter of an end that is of the annular flow-guiding platform 22 and that extends into the pilot chamber 82 is less than an outer diameter of the other end; an annular flow-guiding groove 23, where the annular flow-guiding groove 23 is disposed around the annular flow-guiding platform 22; and at least one flow-guiding branch groove 24, where one end of the flow-guiding branch groove 24 communicates with the annular flow-guiding groove 23, and the other end communicates with the third overflow passage 85.

In some embodiments, there are a plurality of third overflow passages 85 that are spaced apart in a circumferential direction of the overflow valve fixing sleeve 20. There are a plurality of flow-guiding branch grooves 24 that are spaced apart in the circumferential direction of the overflow valve fixing sleeve 20. One end of each flow-guiding branch groove 24 communicates with the annular flow-guiding groove 23, and the other end communicates with a corresponding third overflow passage 85.

In some embodiments, an overflow valve distance adjustment ring 110 is further included. The overflow valve distance adjustment ring 110 is disposed in the valve body 50 and supported between the overflow valve seat 10 and the overflow valve fixing sleeve 20.

In some embodiments, the overflow valve seat 10 is in threaded fit with the valve body 50, and the overflow valve seat 10 adjusts a deformation amount of the overflow valve distance adjustment ring 110 by adjusting a degree of tightening with the valve body 50, to adjust a distance from each of the overflow valve fixing sleeve 20 and the overflow valve body 30 to the overflow valve seat 10.

In some embodiments, the control valve 60 includes: an electromagnetic assembly 120, where the electromagnetic assembly 120 is mounted in the valve body 50; a valve core cover 130, where the valve core cover 130 is mounted in the electromagnetic assembly 120; a valve core 140, where the valve core 140 is movably mounted in the valve core cover 130; a guide rod 150, where the guide rod 150 is connected to the valve core 140; and a pilot valve plug 90, where the pilot valve plug 90 is connected to the guide rod 150. When the electromagnetic assembly 120 is energized, the valve core 140 generates magnetism and attracts the valve body 50. When the valve core 140 moves, movement of the overflow valve body 30 is controlled through the guide rod 150 and the pilot valve plug 90.

In some embodiments, the electromagnetic assembly 120 includes: an insulating bracket 121, where the insulating bracket 121 is sleeved on the valve core cover 130, and a coil groove 1211 is disposed on an outer sidewall; a coil 122, where the coil 122 is wound in the coil groove 1211; and a magnetically conductive cover 123, where the magnetically conductive cover 123 is mounted in the valve body 50 and covers the coil 122.

In some embodiments, the control valve 60 further includes a magnetic isolation ring 160. The magnetic isolation ring 160 is disposed around the valve core 140 and located between the valve core cover 130 and the valve body 50.

In some embodiments, a guide rod groove 131 is configured on an inner wall surface of the valve core cover 130, and a first guide sleeve 132 is disposed in the guide rod groove 131. The valve body 50 is configured with a guide rod hole 53, and a second guide sleeve 54 is disposed in the guide rod hole 53. The guide rod 150 movably fits with the first guide sleeve 132 and the second guide sleeve 54.

In some embodiments, at least one first flow-through groove 133 is disposed on an outer side surface that is of the first guide sleeve 132 and that fits with the valve core cover 130, and two ends of the first flow-through groove 133 respectively penetrate two axial ends of the first guide sleeve 132. At least one second flow-through groove is disposed on an outer side surface that is of the second guide sleeve 54 and that fits with the valve body 50, and two ends of the second flow-through groove respectively penetrate two axial ends of the second guide sleeve 54.

In some embodiments, the control valve 60 further includes: a first elastic member 144, where a first recess 134 is configured on an inner wall surface that is of the valve core cover 130 and that faces the valve core 140, a second recess 141 is configured at an end that is of the valve core 140 and that faces the valve core cover 130, and two ends of the first elastic member 144 respectively fit with the first recess 134 and the second recess 141; and a second elastic member 145, where a third recess 142 is configured at an end that is of the valve core 140 and that faces the valve body 50, one end of the second elastic member 145 fits with the third recess 142, and the other end abuts against the second guide sleeve 54. The first elastic member 144 and the second elastic member 145 jointly apply an elastic force to the valve core 140 to maintain positional stability of the valve core 140.

In some embodiments, an assembly ring 13 is configured on a side that is of the overflow valve seat 10 and that faces away from the overflow valve body 30. A first sealing groove 14 extending in a circumferential direction of the assembly ring 13 is disposed on an outer peripheral surface of the assembly ring 13, the first sealing groove 14 is provided with a first sealing ring 15, and the first sealing ring 15 seals a gap between the assembly ring 13 and an inner cylinder 171 of the damper 2000.

In some embodiments, a second sealing groove 56 is disposed on an outer peripheral surface of the valve body 50, the second sealing groove 56 is provided with a second sealing ring 57, and the second sealing ring 57 seals a gap between the valve body 50 and an outer cylinder 172 of the damper 2000.

According to an embodiment of yet another aspect of this application, an electromagnetic assembly 120 is provided, including: an insulating bracket 121, where a coil groove 1211 is disposed on an outer sidewall of the insulating bracket 121; and a magnetically conductive cover 123, where the magnetically conductive cover 123 is mounted on the insulating bracket 121 and covers the coil groove 1211. At least one anti-rotation positioning post 1213 is configured at one end of the insulating bracket 121, the magnetically conductive cover 123 is provided with at least one anti-rotation positioning hole 1231, and the anti-rotation positioning post 1213 passes through the anti-rotation positioning hole 1231. A part that is of the anti-rotation positioning post 1213 and that extends out of the anti-rotation positioning hole 1231 is configured with an axial positioning portion 1214, and the magnetically conductive cover 123 is stopped by the axial positioning portion 1214.

Therefore, through fitting between the anti-rotation positioning post and the anti-rotation positioning hole, and by disposing the axial positioning portion on the anti-rotation positioning post, a problem, in the conventional technology, that a coil and a coil bracket of a solenoid valve are susceptible to external impact and consequently displacement occurs is resolved. This can further enable the magnetically conductive cover and the insulating bracket to stop and fit with each other, and can further ensure positional stability of the insulating bracket and the coil, thereby improving overall stability of an adjustment module and preventing a problem of electromagnetic force fluctuation caused by displacement due to rotation of the coil when the solenoid valve performs damping operation.

In some embodiments, the axial positioning portion 1214 is integrally formed with the anti-rotation positioning post 1213.

In some embodiments, there are a plurality of anti-rotation positioning posts 1213 that are spaced apart in a circumferential direction of the insulating bracket 121, and there are a plurality of anti-rotation positioning holes 1231 that are spaced apart in a circumferential direction of the magnetically conductive cover 123. The plurality of anti-rotation positioning posts 1213 pass through the plurality of anti-rotation positioning holes 1231 in a one-to-one correspondence.

In some embodiments, the plurality of anti-rotation positioning posts 1213 are evenly spaced apart in the circumferential direction of the insulating bracket 121, and the plurality of anti-rotation positioning holes 1231 are evenly spaced apart in the circumferential direction of the magnetically conductive cover 123.

In some embodiments, a cross-section of the anti-rotation positioning post 1213 and a cross-section of the anti-rotation positioning hole 1231 are mutually adapted circular shapes.

In some embodiments, a coil 122 is further included. The coil 122 is wound in the coil groove 1211 of the insulating bracket 121 and covered by the magnetically conductive cover 123. The one end of the insulating bracket 121 is configured with a wire post 1212, and the magnetically conductive cover 123 is provided with an avoidance hole 1233. The wire post 1212 extends out of the magnetically conductive cover 123 from the avoidance hole 1233, and the wire post 1212 is provided with a wire hole for the coil 122 to extend out.

In some embodiments, there are at least two wire holes that are respectively provided for two ends of the coil 122 to extend out.

In some embodiments, the wire post 1212 extends in the circumferential direction of the insulating bracket 121, and the at least two wire holes are arranged in the circumferential direction of the insulating bracket 121.

In some embodiments, a control valve 60 includes: the foregoing electromagnetic assembly 120; a valve body 50, where the insulating bracket 121 and the magnetically conductive cover 123 are mounted on the valve body 50; a coil 122, where the coil 122 is wound in the coil groove 1211 of the insulating bracket 121 and covered by the magnetically conductive cover 123; a valve core cover 130, where the valve core cover 130 is mounted on the insulating bracket 121; a valve core 140, where the valve core 140 is movably mounted in the valve core cover 130; a guide rod 150, where the guide rod 150 is connected to the valve core 140; and a pilot valve plug 90, where the pilot valve plug 90 is connected to the guide rod 150. When the coil 122 is energized, the valve core 140 generates magnetism and attracts the valve body 50.

In some embodiments, a magnetic isolation ring 160 is further included. The magnetic isolation ring 160 is disposed around the valve core 140 and located between the valve core cover 130 and the valve body 50.

In some embodiments, one of the magnetic isolation ring 160 and the valve core cover 130 is provided with an inner assembly ring 1232, and the other is provided with an outer assembly ring 161. The outer assembly ring 161 is sleeved on the inner assembly ring 1232 and is in interference fit with the inner assembly ring 1232.

In some embodiments, an annular support groove 52 is disposed on a side that is of the valve body 50 and that faces the control valve 60, and an annular support platform 162 is configured on a side that is of the magnetic isolation ring 160 and that faces the valve body 50. The annular support platform 162 fits with the annular support groove 52 and is in interference fit with the annular support groove 52.

In some embodiments, a guide rod groove 131 is configured on an inner wall surface of the valve core cover 130, and the guide rod 150 movably fits with the guide rod groove 131.

In some embodiments, a first guide sleeve 132 is disposed in the guide rod groove 131, and the guide rod 150 movably fits with the first guide sleeve 132.

In some embodiments, at least one first flow-through groove 133 is disposed on an outer side surface that is of the first guide sleeve 132 and that fits with the valve core cover 130, and two ends of the first flow-through groove 133 respectively penetrate two axial ends of the first guide sleeve 132.

In some embodiments, there are a plurality of first flow-through grooves 133 that are spaced apart in a circumferential direction of the first guide sleeve 132.

In some embodiments, the valve body 50 is configured with a guide rod hole 53, and the guide rod 150 movably fits with the guide rod hole 53.

In some embodiments, a second guide sleeve 54 is disposed in the guide rod hole 53, and the guide rod 150 movably fits with the second guide sleeve 54.

In some embodiments, at least one second flow-through groove is disposed on an outer side surface that is of the second guide sleeve 54 and that fits with the valve body 50, and two ends of the second flow-through groove respectively penetrate two axial ends of the second guide sleeve 54.

In some embodiments, there are a plurality of second flow-through grooves that are spaced apart in a circumferential direction of the second guide sleeve 54.

In some embodiments, the control valve 60 further includes: a first elastic member 144, where a first recess 134 is configured on an inner wall surface that is of the valve core cover 130 and that faces the valve core 140, a second recess 141 is configured at an end that is of the valve core 140 and that faces the valve core cover 130, and two ends of the first elastic member 144 respectively fit with the first recess 134 and the second recess 141; and a second elastic member 145, where a third recess 142 is configured at an end that is of the valve core 140 and that faces the valve body 50, one end of the second elastic member 145 fits with the third recess 142, and the other end abuts against the second guide sleeve 54. The first elastic member 144 and the second elastic member 145 jointly apply an elastic force to the valve core 140 to maintain positional stability of the valve core 140.

In some embodiments, the valve core 140 is provided with at least one through hole 143, and two ends of the through hole 143 respectively penetrate two ends of the valve core 140.

In some embodiments, a limiting structure 55 is configured on a side that is of the valve body 50 and that faces the valve core 140. Two limit positions of the valve core 140 in a movement direction of the valve core 140 are respectively defined by the limiting structure 55 and the valve core cover 130.

In some embodiments, the pilot valve plug 90 is configured with a mounting ring 94. The mounting ring 94 is sleeved on the guide rod 150 and is in clearance fit with the guide rod 150.

In some embodiments, the adjustment module 1000 separately communicates with a compression chamber and a rebound chamber of the damper 2000. The adjustment module 1000 includes: an overflow valve seat 10; an overflow valve body 30, where the overflow valve body 30 adjusts a fluid flow rate between the compression chamber and the rebound chamber by getting close to and away from the overflow valve seat 10; and the foregoing control valve 60, where the control valve 60 controls movement of the overflow valve body 30 to get close to and away from the overflow valve seat 10.

According to an embodiment of an aspect of this application, a damper 2000 is provided, including: at least one adjustment module 1000 for a damper 2000; and a cylinder body 170. The compression chamber and the rebound chamber are defined in the cylinder body 170.

In some embodiments, the cylinder body 170 includes an outer cylinder 172 and an inner cylinder 171 disposed in the outer cylinder 172. The adjustment module 1000 is externally disposed outside the outer cylinder 172.

In some embodiments, there are at least two adjustment modules 1000. One of the adjustment modules 1000 adjusts a flow rate of fluid flowing from the compression chamber to the rebound chamber, and another of the adjustment modules 1000 adjusts a flow rate of fluid flowing from the rebound chamber to the compression chamber.

According to an embodiment of an aspect of this application, a vehicle 3000 is provided, including the foregoing damper 2000.

In the descriptions of this application, it should be understood that the orientations or positional relationships indicated by the terms "center", "longitudinal", "transversal", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientations or positional relationships shown in the accompanying drawings, and are only for ease of describing this application and simplifying the description, rather than indicating or implying that an indicated apparatus or element needs to have a specific orientation or be constructed and operated in a specific orientation. Therefore, this cannot be understood as a limitation on this application.

In the descriptions of this application, "a first feature" and "a second feature" may include one or more such features. In the descriptions of this application, "a plurality of" means two or more, and "several" means one or more. In the descriptions of this application, that the first feature is "above" or "below" the second feature may include that the first feature and the second feature are in direct contact, or may include that the first feature and the second feature are not in direct contact but in contact through another feature between the first feature and the second feature. In the descriptions of this application, that the first feature is "above", "on", and "over" the second feature includes that the first feature is directly above and obliquely above the second feature, or merely indicates that a horizontal height of the first feature is higher than that of the second feature.

In the descriptions of this specification, descriptions provided with reference to terms "specific embodiment", "specific example", and the like mean that specific features, structures, materials, or characteristics described with reference to the embodiment or example are included in at least one embodiment or example of this application. In this specification, illustrative descriptions of the foregoing terms do not necessarily refer to a same embodiment or example. It should be noted that in this application, combinations of any two or more different embodiments also fall within the scope of this application.

For a brevity purpose, the combinations are not specifically described one by one in this application.

Although embodiments of this application are shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. An adjustment module (1000) for a damper (2000), wherein the adjustment module (1000) separately communicates with a compression chamber and a rebound chamber of the damper (2000), and the adjustment module (1000) comprises:
an overflow valve seat (10);
an overflow valve fixing sleeve (20), wherein the overflow valve fixing sleeve (20) is located on one side of the overflow valve seat (10);
an overflow valve body (30), wherein the overflow valve body (30) is movably disposed in the overflow valve fixing sleeve (20), and the overflow valve body (30) adjusts a fluid flow rate between the compression chamber and the rebound chamber by getting close to and away from the overflow valve seat (10); and
an overflow elastic member (40), wherein the overflow elastic member (40) is disposed between the overflow valve fixing sleeve (20) and the overflow valve body (30), and the overflow elastic member (40) provides an elastic force for pushing the overflow valve body (30) toward the overflow valve seat (10).

2. The adjustment module (1000) for a damper (2000) according to claim 1, wherein the overflow elastic member (40) is a spring, the overflow elastic member (40) is disposed in the overflow valve fixing sleeve (20), one end of the overflow elastic member (40) abuts against the overflow valve fixing sleeve (20), and the other end abuts against the overflow valve body (30).

3. The adjustment module (1000) for a damper (2000) according to claim 2, wherein an outer diameter of the end that is of the overflow elastic member (40) and that abuts against the overflow valve fixing sleeve (20) is greater than an outer diameter of the end that is of the overflow elastic member (40) and that abuts against the overflow valve body (30).

4. The adjustment module (1000) for a damper (2000) according to any one of claims 1 to 3, further comprising:
a valve body (50), wherein the overflow valve fixing sleeve (20) is mounted in the valve body (50), and at least a part of the overflow valve seat (10) is mounted in the valve body (50); and
a control valve (60), wherein the control valve (60) controls movement of the overflow valve body (30) to get close to and away from the overflow valve seat (10).

5. The adjustment module (1000) for a damper (2000) according to claim 4, wherein the overflow valve seat (10) is provided with at least one first communication hole (11) and at least one second communication hole (12), one of the compression chamber and the rebound chamber communicates with the first communication hole (11), and the other of the compression chamber and the rebound chamber communicates with the second communication hole (12);
the adjustment module (1000) is configured with a first flow path (70) and a second flow path (80), and a flow rate of the first flow path (70) is different from a flow rate of the second flow path (80); and
the adjustment module (1000) controls the first communication hole (11) and the second communication hole (12) to selectively pass through at least one of the first flow path (70) and the second flow path (80).

6. The adjustment module (1000) for a damper (2000) according to claim 5, wherein the first communication hole (11) is disposed at a center of the overflow valve seat (10), there are a plurality of second communication holes (12), and the plurality of second communication holes (12) are spaced apart in a circumferential direction of the overflow valve seat (10) and surround the first communication hole (11).

7. The adjustment module (1000) for a damper (2000) according to claim 6, further comprising:
an overflow valve distance adjustment ring (110), wherein the overflow valve distance adjustment ring (110) is disposed in the valve body (50) and supported between the overflow valve seat (10) and the overflow valve fixing sleeve (20).

8. The adjustment module (1000) for a damper (2000) according to claim 7, wherein the overflow valve seat (10) is in threaded fit with the valve body (50), and the overflow valve seat (10) adjusts a deformation amount of the overflow valve distance adjustment ring (110) by adjusting a degree of tightening with the valve body (50), to adjust a distance from each of the overflow valve fixing sleeve (20) and the overflow valve body (30) to the overflow valve seat (10).

9. The adjustment module (1000) for a damper (2000) according to claim 7 or 8, wherein a height of the overflow valve distance adjustment ring (110) in an axial direction of the overflow valve distance adjustment ring (110) is 2.5 mm to 5 mm.

10. The adjustment module (1000) for a damper (2000) according to any one of claims 7 to 9, wherein a section that is of the overflow valve distance adjustment ring (110) and that is parallel to the axial direction of the overflow valve distance adjustment ring (110) is configured to be arc-shaped or linear, and a distance between an end that is of the overflow valve distance adjustment ring (110) and that is adjacent to the overflow valve seat (10) and a central axis of the overflow valve distance adjustment ring (110) is greater than a distance between an end that is of the overflow valve distance adjustment ring (110) and that is adjacent to the overflow valve fixing sleeve (20) and the central axis of the overflow valve distance adjustment ring (110).

11. The adjustment module (1000) for a damper (2000) according to any one of claims 7 to 10, wherein a first abutting inclined surface (111) is configured at an end that is of the overflow valve distance adjustment ring (110) and that faces the overflow valve fixing sleeve (20), and a distance between the first abutting inclined surface (111) and the central axis of the overflow valve distance adjustment ring (110) gradually increases in a direction from the overflow valve seat (10) to the overflow valve fixing sleeve (20);
a second abutting inclined surface (25) is configured at an end that is of the overflow valve fixing sleeve (20) and that faces the overflow valve distance adjustment ring (110), and a distance between the second abutting inclined surface (25) and a central axis of the overflow valve fixing sleeve (20) gradually increases in the direction from the overflow valve seat (10) to the overflow valve fixing sleeve (20); and
the first abutting inclined surface (111) fits with the second abutting inclined surface.

12. The adjustment module (1000) for a damper (2000) according to any one of claims 1 to 11, further comprising:
an overflow sealing member (100), wherein the overflow sealing member (100) separately abuts and seals against the overflow valve fixing sleeve (20) and the overflow valve body (30) of the adjustment module (1000), a deformation groove (101) is configured on a side that is of the overflow sealing member (100) and that faces an overflow chamber (81) of the adjustment module (1000), and the deformation groove (101) communicates with the overflow chamber (81), wherein
the overflow sealing member (100) is configured so that after fluid in the overflow chamber (81) flows into the deformation groove (101), pressure applied to the overflow sealing member (100) causes the overflow sealing member (100) to expand in a direction of at least one of the overflow valve fixing sleeve (20) and the overflow valve body (30).

13. The overflow sealing member (100) for the adjustment module (1000) according to claim 12, wherein the overflow sealing member (100) is configured to be annular and located between an outer peripheral surface of the overflow valve body (30) and an inner peripheral surface of the overflow valve fixing sleeve (20), the deformation groove (101) extends in a circumferential direction of the overflow sealing member (100), and a width of a side that is of the deformation groove (101) and that is adjacent to the overflow chamber (81) is greater than a width of a side that is of the deformation groove (101) and that is away from the overflow chamber (81).

14. The overflow sealing member (100) for the adjustment module (1000) according to claim 12 or 13, wherein a distance between an outer peripheral surface and an inner peripheral surface of a side that is of the overflow sealing member (100) and that is adjacent to the overflow chamber (81) is greater than a distance between an outer peripheral surface and an inner peripheral surface of a side that is of the overflow sealing member (100) and that is away from the overflow chamber (81).

15. The overflow sealing member (100) for the adjustment module (1000) according to any one of claims 12 to 14, comprising:
an outer sealing ring (103), wherein the outer sealing ring (103) abuts against the overflow valve fixing sleeve (20); and
an inner sealing ring (102), wherein the inner sealing ring (102) abuts against the overflow valve body (30), wherein
the deformation groove (101) is formed between the outer sealing ring (103) and the inner sealing ring (102).

16. The overflow sealing member (100) for the adjustment module (1000) according to claim 15, wherein a cross-section of the inner sealing ring (102) is disposed parallel to a central axis of the overflow sealing member (100); and
a cross-section of the outer sealing ring (103) is disposed inclined relative to the central axis of the overflow sealing member (100), and a distance between the outer sealing ring (103) and the central axis of the overflow sealing member (100) gradually increases in a direction toward the overflow chamber (81).

17. The overflow sealing member (100) for the adjustment module (1000) according to claim 15 or 16, wherein a section that is of the inner sealing ring (102) and that is parallel to the central axis of the overflow sealing member (100) is linear or arc-shaped; and
a section that is of the outer sealing ring (103) and that is parallel to the central axis of the overflow sealing member (100) is linear or arc-shaped.

18. The overflow sealing member (100) for the adjustment module (1000) according to any one of claims 15 to 17, further comprising:
a bottom sealing ring (104), wherein an outer peripheral edge of the bottom sealing ring (104) is connected to a side that is of the outer sealing ring (103) and that faces away from the overflow chamber (81), and an inner peripheral edge of the bottom sealing ring (104) is connected to a side that is of the inner sealing ring (102) and that faces away from the overflow chamber (81).

19. The overflow sealing member (100) for the adjustment module (1000) according to claim 18, wherein a side surface that is of the bottom sealing ring (104) and that faces away from the outer sealing ring (103) and the inner sealing ring (102) is configured as a plane perpendicular to the central axis of the overflow sealing member (100).

20. The overflow sealing member (100) for the adjustment module (1000) according to claim 18 or 19, wherein a side surface that is of the bottom sealing ring (104) and that forms a groove bottom of the deformation groove (101) is configured as a plane perpendicular to the central axis of the overflow sealing member (100).

21. The adjustment module (1000) for a damper (2000) according to any one of claims 1 to 3, wherein the overflow valve body (30) is provided with:
a first overflow passage (83), wherein the first overflow passage (83) communicates with an overflow chamber (81) of the adjustment module (1000) and is provided for fluid to flow into the overflow chamber (81); and
a second overflow passage (84), wherein the second overflow passage (84) communicates with the overflow chamber (81) and is provided for fluid to flow out of the overflow chamber (81), wherein
a minimum cross-sectional area of the second overflow passage (84) is greater than a minimum cross-sectional area of the first overflow passage (83).

22. The adjustment module (1000) for a damper (2000) according to claim 21, wherein the overflow valve body (30) comprises:
a valve shoulder (33), wherein the first overflow passage (83) is disposed in the valve shoulder (33), and the overflow chamber (81) is located on one side of the valve shoulder (33) in a thickness direction; and
a guide post (31), wherein the guide post (31) is disposed on the one side of the valve shoulder (33) in the thickness direction, and the second overflow passage (84) is disposed in the guide post (31).

23. The adjustment module (1000) for a damper (2000) according to claim 22, wherein a central axis of the guide post (31) coincides with a central axis of the valve shoulder (33).

24. The adjustment module (1000) for a damper (2000) according to claim 22 or 23, wherein the second overflow passage (84) comprises:
at least one radial segment (841), wherein the radial segment (841) extends in a direction perpendicular to an axial direction of the guide post (31), and one end of the radial segment (841) communicates with the overflow chamber (81); and
an axial segment (842), wherein the axial segment (842) extends in the axial direction of the guide post (31), one end of the axial segment (842) communicates with the other end of the radial segment (841), and the other end of the axial segment (842) penetrates an end that is of the guide post (31) and that faces away from the valve shoulder (33).

25. The adjustment module (1000) for a damper (2000) according to claim 24, wherein a ratio of the minimum cross-sectional area of the first overflow passage (83) to a minimum cross-sectional area of the axial segment (842) is 1:10 to 1:4.

26. The adjustment module (1000) for a damper (2000) according to claim 24 or 25, wherein a sum of minimum cross-sectional areas of all radial segments (841) is greater than or equal to the minimum cross-sectional area of the axial segment (842).

27. The adjustment module (1000) for a damper (2000) according to any one of claims 24 to 26, wherein there are a plurality of radial segments (841) that are spaced apart in a circumferential direction of the guide post (31).

28. The adjustment module (1000) for a damper (2000) according to claim 27, wherein there are two radial segments (841) whose central axes coincide.

29. The adjustment module (1000) for a damper (2000) according to any one of claims 24 to 28, wherein the axial segment (842) comprises:
a bottom segment (8421), wherein one end of the bottom segment (8421) communicates with the other end of the radial segment (841); and
a top segment (8422), wherein one end of the top segment (8422) communicates with the other end of the bottom segment (8421), and the other end of the top segment (8422) penetrates the end that is of the guide post (31) and that faces away from the valve shoulder (33), wherein
a cross-sectional area of the bottom segment (8421) is less than a cross-sectional area of the top segment (8422).

30. The adjustment module (1000) for a damper (2000) according to any one of claims 24 to 29, wherein the first overflow passage (83) comprises:
a middle segment (8313);
a first diverging segment (8311), wherein the first diverging segment (8311) communicates with the middle segment (8313) and is located on a side that is of the middle segment (8313) and that faces away from the overflow chamber (81), and a cross-sectional area of an end that is of the first diverging segment (8311) and that is adjacent to the middle segment (8313) is less than a cross-sectional area of an end that is of the first diverging segment (8311) and that is away from the middle segment (8313); and
a second diverging segment (8312), wherein the second diverging segment (8312) communicates with the middle segment (8313) and is located on a side that is of the middle segment (8313) and that faces the overflow chamber (81), and a cross-sectional area of the second diverging segment (8312) gradually increases in a direction away from the middle segment (8313).

31. The adjustment module (1000) for a damper (2000) according to any one of claims 22 to 30, wherein the overflow valve body (30) further comprises:
a valve ring (34), wherein the valve ring (34) is disposed on the other side of the valve shoulder (33) in the thickness direction and extends in an annular shape along an outer peripheral edge of the valve shoulder (33).

32. The overflow valve body (30) for the adjustment module (1000) according to claim 31, wherein an overflow sealing groove (32) for assembling an overflow sealing member (100) is disposed on an outer peripheral surface of the valve ring (34).

33. The adjustment module (1000) for a damper (2000) according to claim 32, wherein the overflow sealing groove (32) has a first groove wall (321) and a second groove wall (322), the first groove wall (321) is located on a side that is of the overflow sealing groove (32) and that faces the guide post (31), and the second groove wall (322) is located on a side that is of the overflow sealing groove (32) and that faces away from the guide post (31); and
in a direction perpendicular to an axial direction of the overflow valve body (30), the second groove wall (322) is higher than the first groove wall (321).

34. The adjustment module (1000) for a damper (2000) according to any one of claims 22 to 33, wherein an annular sealing platform (311) for fitting with a pilot valve plug (90) of the adjustment module (1000) is configured at an end that is of the guide post (31) and that is away from the valve shoulder (33), the annular sealing platform (311) is disposed around the second overflow passage (84), and a distance between an inner peripheral surface of an end that is of the annular sealing platform (311) and that is adjacent to the valve shoulder (33) and a central axis of the annular sealing platform (311) is less than a distance between an inner peripheral surface of an end that is of the annular sealing platform (311) and that is away from the valve shoulder (33) and the central axis of the annular sealing platform (311).

35. The adjustment module (1000) for a damper (2000) according to claim 34, wherein a distance between an outer peripheral surface of the end that is of the annular sealing platform (311) and that is adjacent to the valve shoulder (33) and the central axis of the annular sealing platform (311) is greater than a distance between an outer peripheral surface of the end that is of the annular sealing platform (311) and that is away from the valve shoulder (33) and the central axis of the annular sealing platform (311).

36. The adjustment module (1000) for a damper (2000) according to any one of claims 1 to 3, further comprising an electromagnetic assembly (120), wherein the electromagnetic assembly (120) comprises:
an insulating bracket (121), wherein a coil groove (1211) is disposed on an outer sidewall of the insulating bracket (121); and
a magnetically conductive cover (123), wherein the magnetically conductive cover (123) is mounted on the insulating bracket (121) and covers the coil groove (1211), wherein
at least one anti-rotation positioning post (1213) is configured at one end of the insulating bracket (121), the magnetically conductive cover (123) is provided with at least one anti-rotation positioning hole (1231), and the anti-rotation positioning post (1213) passes through the anti-rotation positioning hole (1231); and
a part that is of the anti-rotation positioning post (1213) and that extends out of the anti-rotation positioning hole (1231) is configured with an axial positioning portion (1214), and the magnetically conductive cover (123) is stopped by the axial positioning portion (1214).

37. The adjustment module (1000) for a damper (2000) according to claim 36, wherein the axial positioning portion (1214) is integrally formed with the anti-rotation positioning post (1213).

38. The adjustment module (1000) for a damper (2000) according to claim 36 or 37, wherein there are a plurality of anti-rotation positioning posts (1213) that are spaced apart in a circumferential direction of the insulating bracket (121), there are a plurality of anti-rotation positioning holes (1231) that are spaced apart in a circumferential direction of the magnetically conductive cover (123), and the plurality of anti-rotation positioning posts (1213) pass through the plurality of anti-rotation positioning holes (1231) in a one-to-one correspondence.

39. The adjustment module (1000) for a damper (2000) according to any one of claims 36 to 38, wherein the plurality of anti-rotation positioning posts (1213) are evenly spaced apart in the circumferential direction of the insulating bracket (121), and the plurality of anti-rotation positioning holes (1231) are evenly spaced apart in the circumferential direction of the magnetically conductive cover (123).

40. The adjustment module (1000) for a damper (2000) according to any one of claims 36 to 39, wherein a cross-section of the anti-rotation positioning post (1213) and a cross-section of the anti-rotation positioning hole (1231) are mutually adapted circular shapes.

41. The adjustment module (1000) for a damper (2000) according to any one of claims 36 to 40, comprising a control valve assembly, wherein the control valve assembly comprises the electromagnetic assembly (120), and the control valve assembly further comprises:
a valve body (50), wherein the insulating bracket (121) and the magnetically conductive cover (123) are mounted on the valve body (50);
a coil (122), wherein the coil (122) is wound in the coil groove (1211) of the insulating bracket (121) and covered by the magnetically conductive cover (123);
a valve core cover (130), wherein the valve core cover (130) is mounted on the insulating bracket (121);
a valve core (140), wherein the valve core (140) is movably mounted in the valve core cover (130);
a guide rod (150), wherein the guide rod (150) is connected to the valve core (140); and
a pilot valve plug (90), wherein the pilot valve plug (90) is connected to the guide rod (150), wherein
when the coil (122) is energized, the valve core (140) generates magnetism and attracts the valve body (50).

42. The control valve assembly according to claim 41, further comprising:
a magnetic isolation ring (160), wherein the magnetic isolation ring (160) is disposed around the valve core (140) and located between the valve core cover (130) and the valve body (50).

43. The control valve assembly according to claim 42, wherein one of the magnetic isolation ring (160) and the valve core cover (130) is provided with an inner assembly ring (1232), the other is provided with an outer assembly ring (161), and the outer assembly ring (161) is sleeved on the inner assembly ring (1232) and is in interference fit with the inner assembly ring (1232).

44. The control valve assembly according to claim 42 or 43, wherein an annular support groove (52) is disposed on a side that is of the valve body (50) and that faces the control valve (60), an annular support platform (162) is configured on a side that is of the magnetic isolation ring (160) and that faces the valve body (50), and the annular support platform (162) fits with the annular support groove (52) and is in interference fit with the annular support groove (52).

45. The control valve assembly according to any one of claims 41 to 44, wherein a guide rod groove (131) is configured on an inner wall surface of the valve core cover (130), and the guide rod (150) movably fits with the guide rod groove (131).

46. The control valve assembly according to claim 45, wherein a first guide sleeve (132) is disposed in the guide rod groove (131), and the guide rod (150) movably fits with the first guide sleeve (132).

47. The control valve assembly according to claim 46, wherein at least one first flow-through groove (133) is disposed on an outer side surface that is of the first guide sleeve (132) and that fits with the valve core cover (130), and two ends of the first flow-through groove (133) respectively penetrate two axial ends of the first guide sleeve (132).

48. The control valve assembly according to claim 47, wherein there are a plurality of first flow-through grooves (133) that are spaced apart in a circumferential direction of the first guide sleeve (132).

49. The control valve assembly according to any one of claims 41 to 48, wherein the valve body (50) is configured with a guide rod hole (53), and the guide rod (150) movably fits with the guide rod hole (53).

50. The control valve assembly according to claim 49, wherein a second guide sleeve (54) is disposed in the guide rod hole (53), and the guide rod (150) movably fits with the second guide sleeve (54).

51. The control valve assembly according to claim 50, wherein at least one second flow-through groove is disposed on an outer side surface that is of the second guide sleeve (54) and that fits with the valve body (50), and two ends of the second flow-through groove respectively penetrate two axial ends of the second guide sleeve (54).

52. The control valve assembly according to claim 51, wherein there are a plurality of second flow-through grooves that are spaced apart in a circumferential direction of the second guide sleeve (54).

53. The control valve assembly according to any one of claims 50 to 52, further comprising:
a first elastic member (144), wherein a first recess (134) is configured on an inner wall surface that is of the valve core cover (130) and that faces the valve core (140), a second recess (141) is configured at an end that is of the valve core (140) and that faces the valve core cover (130), and two ends of the first elastic member (144) respectively fit with the first recess (134) and the second recess (141); and
a second elastic member (145), wherein a third recess (142) is configured at an end that is of the valve core (140) and that faces the valve body (50), one end of the second elastic member (145) fits with the third recess (142), and the other end abuts against the second guide sleeve (54), wherein
the first elastic member (144) and the second elastic member (145) jointly apply an elastic force to the valve core (140) to maintain positional stability of the valve core (140).

54. The control valve assembly according to any one of claims 41 to 53, wherein the valve core (140) is provided with at least one through hole (143), and two ends of the through hole (143) respectively penetrate two ends of the valve core (140).

55. The control valve assembly according to any one of claims 41 to 54, wherein a limiting structure (55) is configured on a side that is of the valve body (50) and that faces the valve core (140); and
two limit positions of the valve core (140) in a movement direction of the valve core (140) are respectively defined by the limiting structure (55) and the valve core cover (130).

56. The control valve assembly according to any one of claims 41 to 55, wherein the pilot valve plug (90) is configured with a mounting ring (94), and the mounting ring (94) is sleeved on the guide rod (150) and is in clearance fit with the guide rod (150).

57. The control valve assembly according to any one of claims 41 to 56, wherein the solenoid valve assembly is a solenoid valve assembly.

58. A damper (2000), comprising:
at least one adjustment module (1000) for a damper (2000) according to any one of claims 1 to 57; and
a cylinder body (170), wherein the compression chamber and the rebound chamber are defined in the cylinder body (170).

59. The damper (2000) according to claim 58, wherein the cylinder body (170) comprises an outer cylinder (172) and an inner cylinder (171) disposed in the outer cylinder (172), and the adjustment module (1000) is externally disposed outside the outer cylinder (172).

60. The damper (2000) according to claim 58 or 59, wherein there are at least two adjustment modules (1000), one of the adjustment modules (1000) adjusts a flow rate of fluid flowing from the compression chamber to the rebound chamber, and another of the adjustment modules (1000) adjusts a flow rate of fluid flowing from the rebound chamber to the compression chamber.

61. A vehicle (3000), comprising the damper (2000) according to any one of claims 58 to 60.
